# EUROPEAN PATENT SPECIFICATION

(11) **EP 4 152 272 B1**
(45) Date of publication and mention of the grant of the patent: **18.09.2024**
(21) Application number: 22194545.4
(22) Date of filing: 08.09.2022
(51) Int. Cl.: G06V 10/00, G06N 20/00, G06F 9/50, H04L 67/10

(54) **SYSTEMS AND METHODS FOR LOW LATENCY ANALYTICS AND CONTROL OF DEVICES VIA EDGE NODES AND NEXT GENERATION NETWORKS**
SYSTEME UND VERFAHREN ZUR NIEDRIGLATENTEN ANALYTIK UND STEUERUNG VON VORRICHTUNGEN ÜBER RANDKNOTEN UND NETZWERKE DER NÄCHSTEN GENERATION
SYSTÈMES ET PROCÉDÉS D'ANALYSE À FAIBLE LATENCE ET DE COMMANDE DE DISPOSITIFS PAR L'INTERMÉDIAIRE DE N UDS PÉRIPHÉRIQUES ET DE RÉSEAUX DE PROCHAINE GÉNÉRATION

(30) Priority: 16.09.2021 US 202163245192 P; 18.01.2022 US 202217578437
(43) Date of publication of application: 22.03.2023
(73) Proprietor: Accenture Global Solutions Limited, Dublin 4 (IE)
(72) Inventor: SALAMEH, Tariq, Toronto, M5J 2Z6 (CA); DELANEY, Sean, Hoboken, 07030 (US); KAPICH, Kevin Edward, Broomfield, 80023 (US); GUTIERREZ ANEZ, Gabriel Ernesto, Katy, 77494 (US); CASTELLANOS MOLINA, Jose, 66024 Monterrey (MX)
(74) Representative: Müller-Boré & Partner Patentanwälte PartG mbB

(56) References cited:
- US-A1- 2020 013 176

## Description

### CROSS-REFERENCE TO RELATED APPLICATIONS

The present application claims the benefit of priority from U.S. Provisional Application No. 63/245,192 filed September 16, 2021 and entitled "SYSTEMS AND METHODS FOR LOW LATENCY ANALYTICS AND CONTROL OF DEVICES VIA EDGE NODES AND NEXT GENERATION NETWORKS,".

### TECHNICAL FIELD

The present disclosure generally relates to remote analytics systems and more specifically to computing architectures providing low latency analytics and control of devices via edge nodes using edge communication links.

### BACKGROUND

As network technologies continue to advance, both in terms of accessibility and connectivity, the utilization of networks has also expanded. As an example, mobile devices (e.g., cellular communication devices, tablet computing devices, or other handheld electronic devices) were initially limited to certain types of networks (e.g., cellular voice networks) but as cellular communication networks advanced, the capabilities of mobile devices also expanded to include data applications and other functionality. The expanded capabilities of cellular communication networks have become widely available in recent years in certain developed countries and continue to expand in other regions of the world, which have created new ways to utilize various types of network technologies.

Despite the increases in data rates provided by cellular communication and traditional data networks (e.g., broadband, fiber, and Wi-Fi networks), computing resources remain a limiting factor with respect to certain types of processing and functionality. For example, despite increases in computing hardware capabilities, edge computing devices typically remain limited with respect to computing resources (e.g., processor computational capabilities, memory, etc.) as compared to traditional types computing devices (e.g., servers, personal computing devices, laptop computing devices, and the like). As a result of the computing resources limitations of edge computing devices, the edge computing functionality has remained limited and resulted in use of more centralized, non-edge computing devices for many applications. While such computing devices and setups have benefited from the increases to speed and connectivity of existing networks, certain types of applications and functionality (e.g., computer vision-based applications) remain unacceptably slow due to latency and other factors associated with use of traditional network technologies despite the availability of powerful computing hardware. US 2020/031376 A1 relates to systems and methods that allow for dense depth map estimation given input images. According to the US application, embodiments of the deep neural network model comprise computationally efficient structures and fewer layers but still produce good quality results. Further, according to the US application, the deep neural network model is specially configured and trained to operate using a hardware accelerator component or components that can speed computation and produce good results, even if lower precision bit representations are used during computation at the hardware accelerator component.

### SUMMARY

The invention is defined by the independent claims. Dependent claims define preferred embodiments. The present disclosure provides a computing architecture that enables computer vision and other analytical techniques to be provided in a manner that provides for low latency/rapid response by leveraging edge computing devices. In an aspect, sensor devices (e.g., cameras, temperature sensors, motion sensors, etc.) may be disposed in an environment and may capture information that may be analyzed to evaluate a state of the environment or a state of one or more devices and/or persons within the environment. Information recorded by the sensor devices may be transmitted to an edge node using an edge communication link, such as a communication link provided over a next generation network, such as a 5th Generation (5G) communication network. The edge node may implement a computing architecture in accordance with the present disclosure that leverages multiple independent threads processing input data streams in parallel to perform analysis of the environment. The multiple independent threads may include threads executed by a central processing unit (CPU) of the edge node, such as to perform data reception and initial processing of the input data to prepare the input data streams for analysis via one or more machine learning models (e.g., computer vision models). Additionally, the multiple independent threads may include threads executed by a graphics processing unit (GPU) for evaluating model input data (i.e., the results of the pre-processing of the input data) against the one or more machine learning models. The one or more machine learning models may be configured to analyze the model input data according to one or more specific use cases (e.g., to determine whether a worker is wearing appropriate safety equipment or is operating machinery in an appropriate manner), and may generate model outputs for further analysis.

The model outputs may be evaluated using additional independent threads of the CPU and control logic configured to generate control data and outcome data. The control data may be used by one or more threads of a message broker service executing on the CPU to generate command messages for controlling remote devices or notifying users of situations within an environment (e.g., to slow or turn off a remote device or warn a user of unsafe conditions). The data utilized by the various analytics processes may be maintained locally at the edge node in cache memory to facilitate rapid access to the relevant data and a longer term storage may be used to store analytics data for a period of time. The relevant data stored in the longer term storage of the edge node may be used to present information in a graphical user interface and may be periodically transferred to an external system (e.g., a central server or other non-edge computing device).

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention, as long as they do not depart from the invention which is defined by the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the disclosed methods and apparatuses, reference should be made to the embodiments illustrated in greater detail in the accompanying drawings, wherein:
FIG. 1 is a block diagram illustrating a system for performing low latency edge computing analytics in accordance with aspects of the present disclosure;
FIG. 2 is a block diagram illustrating exemplary aspects of a computing architecture facilitating rapid execution of computational services via an edge node in accordance with the present disclosure;
FIG. 3 is a flow diagram illustrating an exemplary method for performing low latency analysis of a monitored environment using edge computing in accordance with aspects of the present disclosure;
FIG. 4 is a block diagram illustrating an exemplary system for monitoring an environment using edge node computing architectures in accordance with aspects of the present disclosure; and
FIG. 5 is a block diagram illustrating another exemplary system for monitoring an environment using edge node computing architectures in accordance with aspects of the present disclosure.

It should be understood that the drawings are not necessarily to scale and that the disclosed embodiments are sometimes illustrated diagrammatically and in partial views. In certain instances, details which are not necessary for an understanding of the disclosed methods and apparatuses or which render other details difficult to perceive may have been omitted. It should be understood, of course, that this disclosure is not limited to the particular embodiments illustrated herein.

### DETAILED DESCRIPTION

Embodiments of the present disclosure provide a computing architecture that facilitates rapid analysis and control of an environment via edge computing nodes. Input data streams may be received at an edge node and prepared for processing by one or more machine learning models. The machine learning models may be trained according to different use cases to facilitate a multi-faceted and comprehensive analysis of the input data. The input data may be evaluated against the machine learning models to produce model outputs that are then evaluated using control logic to produce a set of outcomes and control data. The control data may be utilized to generate one or more command messages or control signals that may be used to provide feedback to a remote device or user regarding a state of a monitored environment or other observed conditions. To improve the throughput of the analytics process, the evaluation of the input data against the machine learning models may be performed on a separate processor than other computing processes. For example, the reception of the input data (and pre-processing of the input data for use with the machine learning models) may be performed using one or more threads running on first processor (e.g., a central processing unit (CPU)) while independent threads running on a second processor (e.g., a graphics processing unit (GPU)) may be utilized for each of the machine learning models. Additionally, independent threads running on the first processor may also be utilized to evaluate the model outputs and produce the control and outcome data, as well as to facilitate generation of command messages. As described in more detail below, the disclosed computing architecture enables computer vision-type analytics and other analytical processes to be performed via edge computing nodes in a manner that is significantly faster than existing techniques.

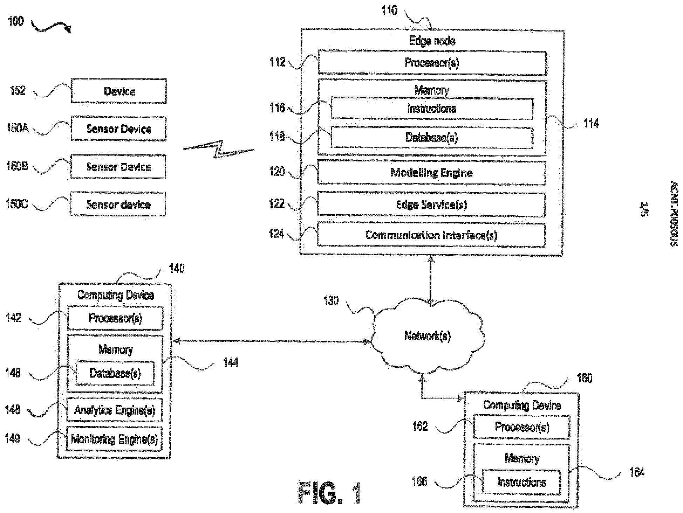

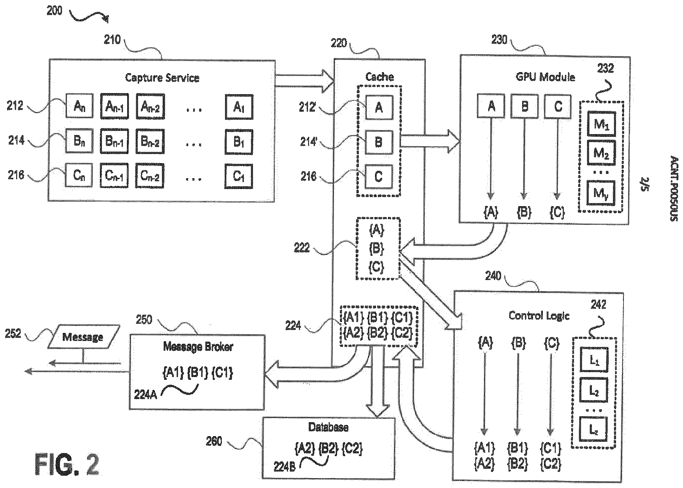

Referring to FIG. 1, a block diagram illustrating a system for performing low latency edge computing analytics in accordance with aspects of the present disclosure is shown as a system 100. The system 100 provides a system architecture that enables video and other types of analytics to be determined in a rapid fashion by leveraging edge nodes, such as edge node 110. As shown in FIG. 1, the edge node 110 includes one or more processors 112, a memory 114, a modelling engine 120, one or more edge service modules 122, and one or more communication interfaces 124. The one or more processors 112 include a CPU or other computing circuitry (e.g., a microcontroller, one or more application specific integrated circuits (ASICs), and the like). The one or more processors 112 also include a GPU. As described in more detail with reference to FIG. 2, the functionality provided by the modelling engine 120 may be executable by the GPU and the functionality provided by the one or more edge services 122 may be executable by the CPU.

The memory 114 may include read only memory (ROM) devices, random access memory (RAM) devices, one or more hard disk drives (HDDs), flash memory devices, solid state drives (SSDs), other devices configured to store data in a persistent or non-persistent state, or a combination of different memory devices. The memory 114 may store instructions 116 that, when executed by the one or more processors 112, cause the one or more processors 112 to perform the operations described in connection with the edge device 110 with reference to FIGs. 1-3. For example, the instructions 116 may include instructions that correspond to the edge services 122 and are executable by the one or more CPUs to provide the functionality of the edge services 122. The instructions 116 may additionally include instructions that correspond to the modelling engine 120 and are executable by the one or more GPUs to provide the functionality of the modelling engine 120. Exemplary aspects of the functionality and operations of the modelling engine 120 and the edge services 122 are described in more detail below with reference to FIG. 2. In addition to the instructions 116, the memory 114 may also store information in one or more databases 118. In some aspects, edge node 110 may include one or more I/O devices (e.g., one or more display devices, a keyboard, a stylus, one or more touchscreens, a mouse, a trackpad, a camera, one or more speakers, haptic feedback devices, or other types of devices that enable a user to receive information from or provide information to the edge node 110).

The one or more communication interfaces 124 may communicatively couple the edge node 110 to remote computing devices 140, 160 via one or more networks 130. In an aspect, the edge node 110 may be communicatively coupled to the computing devices 140, 160 via wired or wireless communication links according to one or more communication protocols or standards (e.g., an Ethernet protocol, a transmission control protocol/internet protocol (TCP/IP), an institute of electrical and electronics engineers (IEEE) 802.11 protocol, and an IEEE 802.16 protocol, and the like). In addition to being communicatively coupled to the computing devices 140, 160 via the one or more networks 130, the one or more communication interfaces 124 may communicatively couple edge node 110 to one or more sensor devices, such as sensor devices 150A-150C, or monitored devices, such as device 152. The edge node 110 may be communicatively coupled to the sensor devices 150A-150C and the devices(s) 152 via an edge communication link (e.g., a communication link established according to a 4th Generation (4G)/long term evolution (LTE) communication standard, a 5th Generation (5G) communication standard).

As shown in FIG. 1, the computing device 140 may include one or more processors 142 and a memory 144. The one or more processors 142 include one or more CPUs, one or more GPUs, or other computing circuitry (e.g., a microcontroller, one or more ASICs, and the like). The memory 144 may include ROM devices, RAM devices, one or more HDDs, flash memory devices, SSDs, other devices configured to store data in a persistent or non-persistent state, or a combination of different memory devices. The memory 144 may store instructions that, when executed by the one or more processors 142, cause the one or more processors 142 to perform the operations described in connection with the computing device 140 with reference to FIGs. 1-3. For example, the instructions may include instructions that correspond to the analytics engine 148 and the monitoring engine(s) 149. In addition to the instructions, the memory 144 may also store information in one or more databases 146. The information stored at database 146 may be similar to the information stored in the database 118. Additionally or alternatively, the information stored at database 146 may be different from the information stored in the database 118. In some aspects, the computing device 140 may include one or more I/O devices (e.g., one or more display devices, a keyboard, a stylus, one or more touchscreens, a mouse, a trackpad, a camera, one or more speakers, haptic feedback devices, or other types of devices that enable a user to receive information from or provide information to the computing device 140). The computing device 140 may also include one or more analytics engines 148, and one or more monitoring engines 149, described in more detail below.

Sensor devices 150A-150C may include cameras (e.g., video cameras, imaging cameras, thermal cameras, etc.), temperature sensors, pressure sensors, acoustic sensors (e.g., ultrasound sensors, transducers, microphones, etc.), motion sensors (e.g., accelerometers, gyroscopes, etc.), or other types of devices capable of capturing and recording information associated with the device 152. For example, device 152 may be a drill press, a saw, or other type of equipment and the sensor devices 150A-150C may monitor the state of the device 152, the environment surrounding the device 152, or other factors. The sensor devices 150A-150C may capture information that may be provided to the edge node 110 for analysis to determine whether a hazard condition is present in the vicinity of the device 152 (e.g., a user has a body part too close to the saw, etc.). The edge node 110 may evaluate the information captured by the sensor devices 150A-150C using the modelling engine 120 and may determine whether to transmit commands to the device 152 based the evaluating. For example, where a hazardous or dangerous condition is detected, the edge services 122 may transmit a command to the device 152 to cause the device 152 turn off or modify one or more operating parameters, thereby creating a safer environment and reducing the likelihood of an accident. Exemplary techniques for analyzing the information captured by the sensor devices 150A-150C and for exchanging commands with the device 152 via the edge services 122 are described in more detail below with reference to FIG. 2.

In addition to leveraging edge node 110 to facilitate rapid analysis of data captured by sensor devices 150A-150C and providing feedback or commands to the device 152 (or other devices), the system 100 may also enable users to remotely monitor the status of one or more devices (e.g., one or more devices 152) and environments where the devices are operating. For example, a user may utilize computing device 140 to access one or more graphical user interfaces supported by computing device 140. The one or more graphical user interfaces may be configured to present information about the environment(s) and device(s) within the environment(s) to the user. Exemplary aspects of the types of information that may be provided to the user via the graphical user interface(s) and other functionality provided via the graphical user interfaces are described in more detail below.

As shown in FIG. 1, the computing device 160 may include one or more processors 162 and a memory 164. The one or more processors 162 include one or more CPUs, one or more GPUs, or other computing circuitry (e.g., a microcontroller, one or more ASICs, and the like). The memory 164 may include ROM devices, RAM devices, one or more HDDs, flash memory devices, SSDs, other devices configured to store data in a persistent or non-persistent state, or a combination of different memory devices. The memory 164 may store instructions 166 that, when executed by the one or more processors 162, cause the one or more processors 162 to perform the operations described in connection with the computing device 160 with reference to FIGs. 1-3. In some aspects, computing device 160 may include one or more I/O devices (e.g., one or more display devices, a keyboard, a stylus, one or more touchscreens, a mouse, a trackpad, a camera, one or more speakers, haptic feedback devices, or other types of devices that enable a user to receive information from or provide information to the computing device 160).

As briefly described above, the edge node 110 is configured to receive information about a monitored environment, such as information captured by the sensor devices 150A-150C. The monitored environment may include one or more devices, such as the device 152, and the edge services 122 of the edge node 110 may be configured to analyze the information received from the sensor devices 150A-150C and determine whether to issue one or more commands to devices within the monitored environment. A computing architecture of the edge node 110 may be configured to enable rapid analysis of the received information and to enable the commands to be issued, where appropriate based on the analysis, to the devices of the monitored environment in real-time or near-real-time. For example, the computing architecture of the edge node 110 may enable the information to be received from the sensor devices 150A-150C, analyzed, and commands to be issued to and received at the device 152 within a threshold period of time. In an aspect, the threshold period of time may be less than 200 milliseconds (ms). In an additional or alternative aspect, the threshold period of time may be less 100 ms. In yet another additional or alternative aspect, the threshold period of time may be less than 100 ms. In some aspects, the threshold period of time may be between 30 ms and 80 ms (e.g., 30-35 ms, 30-40 ms, 40-50 ms, 40-60 ms, 50-60 ms, 60-80 ms, and the like). In some aspects, the threshold period of time may be approximately 50 ms.

Referring to FIG. 2, a block diagram illustrating exemplary aspects of a computing architecture facilitating rapid execution of computational services via an edge node in accordance with the present disclosure is shown as a computing architecture 200. The exemplary computing architecture 200 shown in FIG. 2 may be utilized by an edge node, such as edge node 110 of FIG. 1, to provide functionality in connection with monitoring an environment, such as an environment that includes sensor devices (e.g., the sensor devices 150A-150C of FIG. 1) and devices (e.g., device 152 of FIG. 1). The devices of the monitored environment may include tools (e.g., drill presses, saws, and the like) or other types of machinery and the functionality provided by the computing architecture 200 may enable various types of operations for monitoring and managing the environment, such as to monitor the status of the devices and safety of users within the environment.

As shown in FIG. 2, the computing architecture 200 may provide services, such as a capture service 210 and a message broker service 250. In an aspect, the capture service 210 and the message broker service 250 may be included in the edge services 122 of FIG. 1. The capture service 210 may be configured to receive and process information from sensor devices (e.g., the sensor devices 150A-150C of FIG. 1). For example, the sensor devices may include a camera providing video frame data 212, a camera providing video frame data 214, and a temperature sensor providing temperature data 216. The video frame data 212 may include frames of video data (e.g., video frames A₁-Aₙ) captured by the camera over a period of time (n); the video frame data 214 may include frames of video data (e.g., video frames B₁-Bₙ) captured by the camera over the period of time (n); and the temperature data 216 may include temperature measurements (e.g., temperatures C₁-Cₙ) captured by the temperature sensor over the period of time (n). It is noted that the video frames 212 and the video frames 214 may correspond to video streams captured from different angles and a device of interest (e.g., the device 152 of FIG. 1) may be within the field of view of both video streams. The temperature data may include temperature information associated with the device of interest, which may enable high temperature or overheat conditions to be detected. It is noted that the information received from different sensor devices may have the same or different capture intervals. For example, the video frame data 212, 214 may be captured at the same frame rate (e.g., 30 frames per second (fps), 60 fps) or at different frame rates (e.g., the video frame data 212 may be captured at 30 fps and the video frame data 214 may be captured at 60 fps). Additionally, the temperature information 216 may be captured once every second, once every minute, etc. In such a scenario, one instance of temperature data 216 may be associated with a time interval corresponding to multiple instances of video frame data 212, 214 (e.g., one temperature measurement may provide temperature information for the device during multiple frames of video data).

As the various types of information are captured by the capture service 210, information associated with the captured information may be stored in a cache memory 220 (e.g., a cache memory of the memory 114 of FIG. 1). In some aspects, the captured information may be processed prior to being stored at the cache memory 220. For example, the video frame data 212, 214 may be processed to prepare the video frames for ingestion by a machine learning model, such as a computer vision model generated by the modelling engine 120 of FIG. 1. The processing of the video frame data may include converting each frame of video data into an array or matrix of numeric values representing the pixels of the video frame (e.g., a numeric value representing to color or gray scale level of the pixels, luminance, and the like), normalization, down-sampling, scaling, or other processes that enable each of the video frames to be converted to a form that may be input into a computer vision model. The information received and processed by the capture service 210 may be stored in the cache memory 220. For example, the video frame data 212 and the video frame data 214 may be stored as processed video frame data 212' and 214'. In some aspects, some of the information captured by the capture service 210 may include information that is not used as an input to the computer vision model(s), such as the temperature data 216, and may be stored in the cache memory 220 without any further processing.

As shown in FIG. 2, the computing architecture 200 includes a GPU module 230. The GPU module 230 may be configured to evaluate at least a portion of the data captured by the capture service 210 using one or more machine learning models, such as the above-described computer vision models. For example, the GPU module 230 may include one or more models 232. In the specific example shown in FIG. 2 the models 232 include y models (e.g., model (M₁, M₂, ... , M_{y}). It is noted that the particular number of models "y" may depend on the particular use case to which the computing architecture 200 is applied and that different use cases may utilize a different number and type of models.

Each of the models 232 may be configured to evaluate input data of a particular type (e.g., image or video frame data, etc.) according to a particular use case. Moreover, the models 232 configured to analyze image data may be trained using data captured from a particular viewing angle, such as the viewing angle associated with the video frame data 212 or the viewing angle associated with the video frame data 214. Using training data captured from different viewing angles may enable the models 232 to be trained to identify relevant use case scenarios in a more accurate manner. For example, where the use case involves monitoring safety of a worker utilizing a drill press, the models 232 may be configured to evaluate whether the worker is safely operating the drill press and detect when an unsafe operating condition occurs. Information from the video frame data 212 and video frame data 214 may be captured from different angles to more effectively monitor the safety of the environment where the worker and drill press are located. For example, the viewing angle associated with the video frame data 212 may show normal/safe operation of the drill press by the worker but the viewing angle associated with the video frame data 214 may show unsafe operation of the drill press by the worker. In such a situation, the model evaluating the video frame data 212' may determine that normal operating conditions are occurring and the model evaluating the video frame data 214' may determine that an unsafe operating condition is occurring. It is noted that the models may not be configured to actually evaluate whether the video frame data indicates "safe" or "unsafe" operating conditions and instead may simply classify the scene depicted in the video frame data. For example, the models 232 may be configured to classify the video frame data into one of a plurality of classifications, such as drill press off, worker not present, worker's hands away from drill press, worker's hand(s) near drill press but not on handles of drill press, worker's hand(s) near drill press but on handles of drill press, etc.

It is noted that the models 232 of the GPU module 230 may include models configured to perform different types of analysis, which may include different types of analysis on a same dataset. For example, a set of video frame data may be analyzed by the GPU module 230 using two different models, each model trained to identify different scenario information (e.g., a worker's hand in an unsafe position with respect to a drill press and whether the worker is wearing appropriate safety gear, such as a hard hat, gloves, eyewear, etc.). Utilizing different models to analyze a same stream of video frame data may enable the models to be maintained in a more compact manner and provide for efficient processing of video frame data in a rapid fashion as compared to trying to use a single (larger) model to evaluate all potential types of information that may be derived from a particular set of video frame data. Accordingly, it should be understood that a single set of input video frame data (or another type of data) may be analyzed using a single model or multiple models depending on the particular configuration of the GPU module 230 and the use cases being considered.

As the cached data (e.g., the video frame data 212', 214') is evaluated against the models 232, outputs associated with the classifications derived from analysis of the cached data may be produced. For example, evaluation of video frame data 212' by model M₁ may produce a classification {A}, evaluation of video frame data 214' by model M₂ may produce a classification {B}, and so on. The classifications output by the GPU module 230 may be stored at the cache memory 220 as classifications 222. The classifications 222 may be evaluated by control logic 240 to determine a state of the monitored environment, such as whether the drill press in the above-described scenario is being operated safely. For example, the control logic 240 may configured with various logic parameters 242 (e.g., L₁, L₂, ... , L_{z}) configured to evaluate the classifications 222. In the example above, the control logic parameters 242 may be applied to or used to evaluate the classifications 222 (or other outputs of the GPU module 230) to produce control data. The control data generated by control logic 240 may include different sets of data, such as a first set of data providing control information and a second set of data corresponding to analysis outcomes. In FIG. 2, the first set of data (e.g., control data) is shown as " {A 1} {B1} {C1}" (224A) and the second set of data (e.g., analysis outcomes) is shown as "{A2}{B2}{C2}" (224B) and may be stored in the cache memory 220 as control logic outputs 224. The first set of data may be provided to the message broker service 250 where it may be used to generate one or more command messages, such as command message 252. The command message 252 may be provided to an external device, such as the device 152 of FIG. 1 or the computing device 160 of FIG. 1.

For example, in the above-example involving a drill press, the command message may be configured for delivery to the drill press or a device coupled to the drill press (e.g., a network enabled device configured to provide control functionality for the drill press) and may include command data to control operations the drill press. For example, where the control logic 240 determines, based on application of the logic parameters 242 to the classifications 222, that the drill press is being operated in an unsafe manner, the command message 252 may include commands to slow or stop the drill press, a command to generate an auditory alert to the drill press operator, or other types of operations to address the unsafe operating conditions detected by the control logic 240. The command message 252 may transmitted to the device by the message broker service 250 via the edge communication link. The second set of data (e.g., "{A2} {B2} {C2}") may be stored in a database 260, which may be one of the one or more databases 118 of FIG. 1. The information stored in the database 260 may maintained for a period of time, such as one hour, and after the period of time may be transferred to a long-term data storage, such as the one or more databases 146 of FIG. 1. Storing the information in the database 260 may enable the data to be access rapidly directly from the edge node implementing the computing architecture 200 without requiring utilization of higher latency networks and systems, such as the computing device 140 of FIG. 1. It is noted that the period of time for which data is retained in the database 260 may be configurable (e.g., a by a user or system administrator) or may be dynamic (e.g., based on available memory space).

In the exemplary flow shown in FIG. 2, various hardware and software techniques may be utilized to increase the speed at which information is processed. For example, functionality provided by the capture service 210, the control logic 240, and the message broker service 250 may be executed on a CPU and the functionality provided by the GPU module 230 may be executed using a GPU. Utilizing the GPU to evaluate the machine learning models against the input data (e.g., the video frame data or other types of data) may enable the computer vision techniques or other artificial intelligence processes to be performed more rapidly. Additionally, utilizing a CPU to perform the functionality provided by the capture service 210, the control logic 240, and the message broker service 250 may also enable those functions to be performed more efficiently.

To further streamline the processing flow, multi-threaded processing may be utilized. For example, each incoming data stream (e.g., the data streams associated with the video frame data 212, 214, and the temperature information 216) may be handled by processes performed by the CPU and/or the GPU via a separate thread. Utilizing different threads in the CPU and GPU enables parallel execution of various processes for different data streams and analysis, allowing multiple use cases or perspectives (e.g., different viewing angles for computer vision processes, etc.) to be considered simultaneously. Additionally, the functionality provided by the different threads executed in parallel produce optimized outputs that are appropriate for the next step of processing, such as pre-processing the video data to a form that is appropriate for the models 232, outputting data objects (e.g., classifications, etc.) via the GPU module 230 that are suitable for handling by the CPU and the logic parameters 242, and the like. Moreover, using the cache memory 220 to share data inputs and outputs between the different threads of the CPU and GPU enables rapid data transfer between the various stages of processing.

In addition to performance efficiencies provided by the computing architecture 200 described above, which enables edge nodes in accordance with the present disclosure to achieve low-latency control and messaging workflows, the computing architecture 200 of the present disclosure also leverages additional techniques to reduce latency and improve the flow and processing of data. For example, prioritization techniques may be utilized to allocate computing resources of the edge node 110 to workflow and processes in a manner that ensures sufficient computing resources (e.g., the CPU, GPU, cache memory, etc.) are allocated to critical workflows and capabilities so that those processes are not starved for computing resources by non-critical workflows and capabilities. To illustrate, the priority levels may include 3 priority levels, such as high, medium, and low. The high priority level may be associated with critical (e.g., in terms of latency or information) workflows and capabilities, such as data ingestion and model object detection and classification. The low priority level may be associated with workflows and capabilities that do not require or mandate real-time "ultra-low latency" operation, and the medium priority level may be associated with workflows and capabilities being used to process important workflows that do not require a lot of processing time (e.g., important micro tasks) and/or do not retrain or hold control of computing resources for a relatively long time (e.g., seconds, minutes, etc.).

As an example of applying the different priority levels described above, the high priority level may be utilized for workflows and capabilities involving ingestion and conditioning of data for analysis by the models and evaluating the conditioned data using the models, as well as allocation of resources in the cache memory for storing data generated and/or used by those processes. The medium priority level may be applied to workflows and capabilities associated with the control logic 240, which may provide time sensitive functionality, such as determining whether to enable or disable devices (e.g., machinery, equipment, etc.) or other control functionality based on analysis of classifications output by the models 232. It is noted that while the ability to control devices based on analysis of the control logic 240 may be time sensitive in certain ways, such as turning off a saw or drill press if requirements for worker safety are not met, as may be determined by the control logic 240, using the medium priority for such tasks may be sufficient since evaluating the classifications output by the models may be performed quickly relative to the computational requirements and time requirements for ingesting, pre-processing, and analyzing the data streams using the models. Since the classifications resulting from the latter are inputs to the control logic 240, applying the higher priority level to the data ingestion and modelling processes ensures that the information relied on by the (medium priority) processes of the control logic 240 is up-to-date or real-time data. Furthermore, when the control logic 240 makes a decision, such as to enable a piece of equipment or machinery when a worker is wearing all safety gear or to disable the piece of equipment when the worker is not wearing all required safety gear, it is not critical that the control logic 240 make additional decisions in real-time and a few ms (e.g., 5-10 ms) may be sufficient to ensure that the control signals are provided to enable/disable the piece of equipment (e.g., because the worker is not likely to be able to remove a piece of safety equipment in such a small time frame). The low priority level may be applied to non-critical tasks, such as storing the control data and/or analysis outcomes in a database.

It is also noted that while in the description above high priority levels are allocated to functionality of the capture service 210, the cache memory 220, and the GPU module 230, medium priority levels are associated with the functionality of the control logic 240, and low priority levels are associated with the message broker service 250 and the database(s) 260, such priority level assignments have been provided by way of illustration, rather than by way of limitation. For example, certain input data streams and processing, as well as the models that analyze those data streams, may be assigned medium or low priority levels while other input data streams, processing, and associated models may be assigned the high priority level (e.g., worker safety models and associated processes may be the high priority level while models for evaluating performance of equipment may be assigned the medium or low priority level). Similarly, certain functionality provided by the control logic 240 and the message broker service 250 may be assigned the high priority level while other functionality of the control logic 240 and the message broker service 250 may be assigned low or medium priority levels (e.g., control logic for determining whether equipment should be enabled/disabled, as well as transmission of control signals to enable/disable the equipment may be assigned high or medium priority levels while other types of functionality by the control logic 240 and the message broker service 250 may be assigned low or medium priority levels).

It should be understood that the application and assignment of priority levels described above has been provided for purposes of illustration, rather than by way of limitation and that other combinations and configurations of the priority level assignments to the functionality of the edge node may be utilized. Moreover, it is noted that the priority levels may be assigned dynamically (i.e., change over time) depending on the state of the monitored environment. For example, in a worker safety use case involving machinery or equipment, models and control logic used to detect whether a worker is wearing required safety equipment may be assigned low or medium priority when a worker is not detected in the vicinity of the machinery or equipment, but may be assigned a higher priority level (e.g., high or medium) after a worker is detected in the vicinity of the machinery or equipment. Other functionality and processes of the computing architecture may similarly be assigned dynamic priority levels according to the particular use case and state of the environment or other target of the monitoring by the sensor devices, etc.

The various features described above enable the computing architecture 200 to compute, store, and share data in a rapid fashion. For example, the computing architecture 200 can complete a cycle of analysis (e.g., receive and process input data via the capture service 210, analyze the input data via the GPU module 230, evaluate the model outputs via the control logic 240, and transmit a message via the message broker service 250 that is received by the target device) within the above-described threshold period of time.

Referring back to FIG. 1, the edge node 110 analyzes information received from the sensor devices 150A-150C and issues commands to the device 152 based on the analysis, as described above with reference to FIG. 2. As briefly described above, the computing device 140 includes an analytics engine 148 and a monitoring engine 149. The analytics engine 148 may be configured to track various metrics associated with the environment where the device 152 is operating, such as to track the number of safety events that have occurred (e.g., the number of times an unsafe event is detected by functionality of the edge node 110), a status of the various sensor devices 150A-150C, an amount of time elapsed since a last safety event, or other types of metrics associated with the monitored environment. The monitoring engine 149 may be configured to monitor the messages transmitted by the message broker service of the edge node 110 (e.g., the message broker service 250 of FIG. 2) for certain types of events (e.g., unsafe operating conditions, etc.). When an event monitored by the monitoring engine 149 occurs, a user may be notified, such as a user operating the computing device 160.

A user may monitor the environment where the device 152 is being operated via a graphical user interface provided by the computing device 140. For example, the graphical user interface may be configured to present information associated with monitored devices and environments. The user may select one of the devices or environments and the graphical user interface may display information associated with a current status of the selected device(s) and environment. Additionally, the graphical user interface may also display information associated with a history of the device 152 or monitored environment. For example, the history information may include information associated with historical events within the environment or associated with the device 152. The user can select events to view detailed information about the event, such as to view a clip of video content associated with the event, a time of the event, or other types of information. In some aspects, the graphical user interface may also provide functionality for recording notes associated with an event, such as to record whether an injury occurred, whether a cause of the event was resolved, or other types of information. In an aspect, the graphical user interface may present data from different data sources simultaneously. For example, a portion of the presented data may be obtained from the database(s) 118 of the edge node 110 (e.g., the database 260 of FIG. 2) and another portion of the presented data may be stored in the database(s) 146. The portions of the data presented from the database(s) 118 may correspond to more recent information while the portions of the data presented from the database(s) 146 may correspond to longer-term or older data.

As briefly described above, the edge services 122 may include a message broker service (e.g., the message broker service 250) that is configured to provide commands to devices, such as the device 152, based on analysis of input data provided by the sensor devices 150A-150C. The commands may include commands to change a mode of operation of the device 152, such as to slow down an operating speed of the device 152, increase the operating speed of the device 152, stop or turn off the device 152, or turn on the device 152. The commands may additionally or alternatively include other types of commands, such as commands configured to play an alarm or audible alert to notify an operator of the device 152 of a particular environmental condition (e.g., the worker is not wearing gloves, a hardhat, eye protection, etc.), display an alert on a computing device (e.g., the computing device 160), or other types of commands.

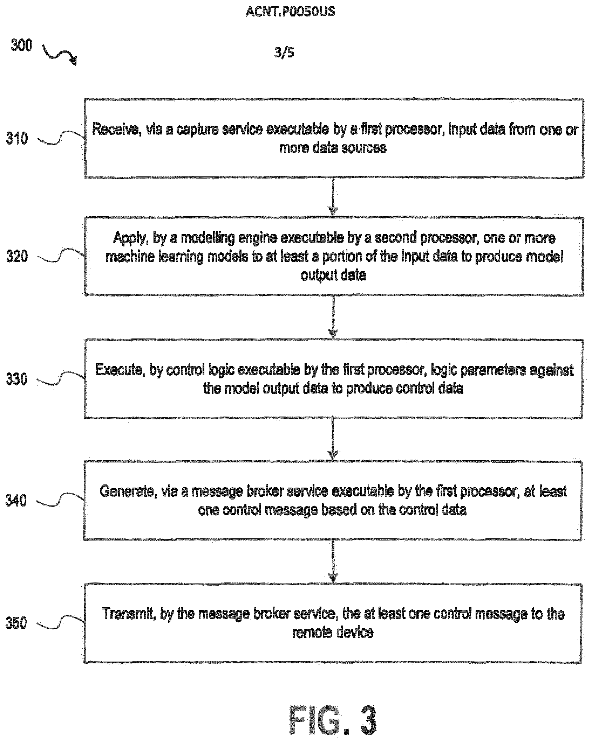

Referring to FIG. 3, a flow diagram illustrating an exemplary method for performing low latency analysis of a monitored environment using edge computing in accordance with aspects of the present disclosure is shown as a method 300. In an aspect, the method 300 may be performed by an edge computing device, such as edge node 110 of FIG. 1 having a computing architecture similar to computing architecture 200 of FIG. 2. In some aspects, steps of the method 300 may be stored as instructions that, when executed by a plurality of processors (e.g., CPUs and GPUs of an edge node), cause the plurality of processors to perform the steps of the method 300 to provide for low latency analysis of a monitored environment using edge computing and machine learning techniques in accordance with the concepts disclosed herein.

At block 310, the method 300 includes receiving, via a capture service executable by a first processor, input data from one or more data sources. As described above with reference to FIG. 2, the input data may include information associated with a monitored environment, one or more monitored devices, or both. For example, the input data may include video stream data associated with one or more video streams captured by cameras disposed within the monitored environment. The cameras may provide different viewing angles of the monitored environment, which may include providing different viewing angles of the one or more monitored devices within the monitored environment or views of different monitored devices within the monitored environment. In some implementations, the input data may not include information associated with monitored devices and may depict other types of information associated with a monitored environment, such as: whether individuals present within the monitored environment are social distancing or wearing masks; real time asset tracking; in line quality inspection (e.g., monitoring manufacturing processes or other product processes to verify production quality); monitoring warehouse stock levels (e.g., monitoring on-hand quantities of products in real-time using computer vision or other techniques); real-time authentication and authorization (e.g., access control and managing allowed/not allowed zones); advanced preventive maintenance (e.g., monitoring component performance and use detecting or predicting when maintenance should be performed); real-time asset protection; and worker productivity tracking. It is noted that the concepts disclosed herein may also be readily adapted to many other types of use cases and scenarios which may or may not involve monitoring individuals or devices within an environment. Accordingly, it is to be appreciated that the exemplary use cases disclosed herein have been provided for purposes of illustration, rather than by way of limitation and that embodiments of the present disclosure may be utilized for other types of real-time or near-real-time monitoring.

At step 320, the method 300 includes applying, by a modelling engine executable by a second processor, one or more machine learning models to at least a portion of the input data to produce model output data. In an aspect, the modelling engine may be the modelling engine 120 of FIG. 1 or the GPU module 230 of FIG. 2 and the second processor may be a GPU, as described above. The one or more machine learning models may include computer vision modules configured to evaluate video stream data, such as the video frame data 212', 214' of FIG. 2. As described above, the portion of the input data to which the one or more machine learning models may be applied may include information extracted or derived from the input data, such as by converting frames of video data into a data structure that represents the video frame content as an array or matrix of numeric values (e.g., values derived from grey scale levels, luminance, etc.). Additionally, the video frame data may be subjected to other processing prior to generating the data structure, such as normalization, down-sampling, scaling, or other processes.

At step 330, the method 300 includes executing, by control logic executable by the first processor, logic parameters against the model output data to produce control data. In an aspect, the logic parameters (e.g., the logic parameters 242 of the control logic 240 of FIG. 2) may be configured to produce control data and outcome data, as described above. The control data may include information associated with operation of a remote device or another type of action item while the outcome data may include information associated with a state of the monitored environment, the monitored device, or both. For example, the state data may indicate a remote device (e.g., the device 152 of FIG. 1) is being operated in a safe or unsafe manner.

At step 340, the method 300 includes generating, via a message broker service executable by the first processor, at least one control message based on the control data and at step 350, the method 300 includes transmitting, by the message broker service, the at least one control message to the remote device. In an aspect, the message broker service may be one of the edge services 122 of FIG. 1, such as the message broker service 250 of FIG. 2. As described above, the control message include one or more commands corresponding to a remote device (e.g., the device 152 of FIG. 1). For example, the one or more commands may include commands to change a mode of operation of the remote device, such as to slow down an operating speed of the remote device, increase the operating speed of the remote device, stop or turn off the remote device, turn on the remote device, play an alarm or audible alert to notify an operator of the device 152 of a particular environmental condition (e.g., the worker is not wearing gloves, a hardhat, eye protection, etc.), or other types of commands.

As described above, the method 300 enables computer vision techniques to be leveraged from edge computing nodes, such as edge node 110 of FIG. 1, while providing low latency and high performance. In some aspects, the method 300 enables processing cycles (e.g., a cycle includes receiving input data at step 310 through receiving (at the target device) the at least one control message generated at step 350 based on the input data) to be completed in under 200 ms, and in many use cases, between 30 ms and 50 ms. Such rapid computing and processing capabilities are orders of magnitude faster than presently available systems and techniques, which can take over 600 ms per cycle and more typically require almost 1000 ms. Moreover, it is noted that the rapid and low latency capabilities of the method 300 are provided, at least in part, by the edge computing architecture of embodiments, as described and illustrated with reference to FIG. 2.

Moreover, it is to be understood that method 300 and the concepts described and illustrated with reference to FIGs. 1 and 2, including utilization of priority levels, may be utilized to provide ultra-low latency and high performance analytics and analysis techniques that leverage 5G or other next generation network and edge architectures. The edge architectures may leverage devices or nodes with having limited computing resources as compared to traditional client-server systems or computing architectures and yet may achieve rapid and accurate analysis of input data streams as described above. Thus, embodiments of the present disclosure should be recognized as providing a framework and computing architecture for designing devices and systems that, despite having limited resources, are capable of performing "or solving for" real-time and mission critical use cases.

Table 1, below, highlights exemplary use cases and examples of the applications and capabilities that may be realized using the computing architectures and functionality disclosed herein. It is noted that the exemplary use cases shown in Table 1 are provided for purposes of illustration, rather than by way of limitation and that the computing architecture and processes described herein may be applied to other use cases where edge devices and computer vision or other modelling techniques and low latency processing are advantageous.

**Table 1**

| **Use Case** | **Description** | **Industry** | **Models** |
|---|---|---|---|
| Worker Safety | Alert workers operating of potential safety threats when working near moving vehicles, machinery, or other equipment. Alerts can be triggered (e.g., a buzzer or siren, or even stop a machine or production line) | Manufacturing, Oil & Gas, Aerospace and Defense, Utilities | Computer Vision: detection of helmets, people, gloves, vests, goggles, eye protection, ear protection; and Data Driven: detection of device performance |
| PPE Detection | Alert supervisors about any worker PPE unsafe behavior (e.g., not wearing the right equipment). | All Industries | Computer Vision: detection of helmets, people, gloves, vests, goggles, eye protection, ear protection |
| Predictive Maintenance and Remote Diagnostics | Collect data from several sensors and feed data to predictive models trained to identify machines requiring preventive repair. | Manufacturing, Oil & Gas, Aerospace and Defense, Utilities | Predictive machine learning data-driven models (structured and unstructured data) |
| Heavy Equipment Operations | Monitor vehicles or equipment that are restricted to specific travel pathways within a facility. When a pathway is violated, initiate an alarm, siren, light, or other indicator in the activated area. | All Industries | Computer Vision: detection of vehicles, people, pathways, obstacles |
| Asset Protection | Alert on assets changes or accidents that impact a production line. Alarms can be generated to alert of potential problems. | Manufacturing, Oil & Gas, Agriculture, Supply Chain and Warehouses, A&D, Utilities | Computer Vision: detection of dropped items, item movement, item alteration, tracking |
| Social Distancing | Alert workers and supervisors in real-time about unsafe distancing between workers as well as workers not following Covid preventive guidelines | All Industries | Computer Vision: detection of people |
| Asset and Warehouse Management | Identify and track assets across multiple locations and monitoring stock levels. | All Industries | Computer Vision: detection of assets, asset tracking, asset location |
| People Tracking, Authentication, and Authorization | Track persons within a location tracking, identify at risk individuals, monitor productivity, and improvements identification. | All Industries | Computer Vision: detection of people, facial recognition, people tracking |
| Product Quality Checking | Utilize machine learning algorithms to identify defective products using cameras (e.g., visual defects) and sensors (e.g., specification defects). | All Industries | Computer Vision: detection of products, defects (e.g., scratches, bends, dents, etc.) |
| Fleet Management | Track the live location of fleet vehicles and optimize routes. | Transportation, Supply Chain | Computer Vision: detection vehicle, route optimization, location |
| Space Utilization and People Counting | Measure space utilization across time to optimize area sizing required for safe operations; monitor and count persons moving within a space. | All Industries | Computer Vision: detection of people, counting people, area measurement |

In the non-limiting and exemplary use cases shown above in Table 1, sensors and devices may be deployed in various types of environments to capture data that may be provided to one or more edge nodes, such as the edge node(s) 110 of FIG. 1 for analysis. The sensors and devices may include cameras (e.g., imaging camera, video cameras, infrared cameras, RGB-D cameras, etc.), temperature sensors, pressure sensors, global positioning system (GPS) devices, radio frequency identification (RFID) devices and sensors, radar sensors, proximity sensors, motion sensors, or types of sensors and devices (e.g., IoT devices). It is noted that the particular sensors and devices utilized to collect the data that is provided to the edge node(s) for analysis in accordance with the concepts disclosed herein may be different for different use cases. For example, in many of the use cases shown in Table 1 computer vision techniques may be utilized, but the image and/or video data, as well as the types of cameras utilized in those use cases may differ (e.g., a PPE monitoring use case may utilize video camera data, a predictive maintenance and remote diagnostics use case may utilize video camera data as well as infrared camera data, and a space utilization use case may utilize a still image camera (i.e., non-video data), video camera data, and RGB-D camera data). Other differences between various types of sensor devices and combinations of sensor devices that may be used for different use cases are also contemplated. Illustrative aspects of some of the above-identified use cases are described in more detail below.

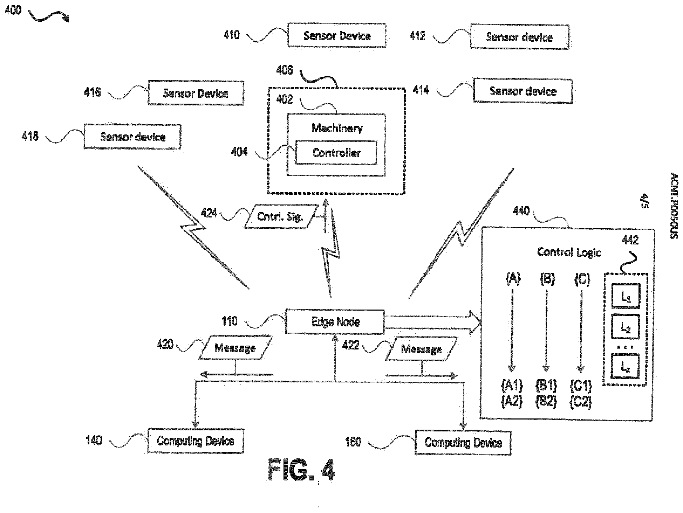

Referring to FIG. 4, a block diagram illustrating an exemplary system for monitoring an environment using edge node computing architectures in accordance with aspects of the present disclosure is shown as a system 400. The system 400 may be designed to monitor safety in an environment where workers interact with various types of machinery 402 (e.g., drill presses, saws, welding tools, or other types of equipment). As shown in FIG. 4, the system 400 includes the edge node 110, computing device 140, and computing device 160 of FIG. 1. The system 400 also includes sensor devices 410, 412, 414, 416, 418, which may include cameras, proximity sensors, temperature sensors, or other types of sensors and devices. For example, the cameras may be disposed at various locations within the environment where the machinery 402 is located and each camera may have a field of view that includes the machinery 402. The cameras may be communicatively coupled to the edge node 110 via an edge network communication link (e.g., a 5G communication link) and transmit data to the edge node 110 for analysis. The data transmitted by the cameras may include video data (e.g., a video stream), still image data (e.g., images captured by the cameras every "X" units of time, such as every 5 milliseconds (ms), 5-25 ms, 20-50 ms, 1 second (s), every 3 s, every minute, or some other frequency), or both. In an aspect, the edge node 110 may transmit control signals to the cameras (or a device coupled to the cameras) to control the frequency with which the cameras provide data to the edge node 110 and/or to control whether the cameras provide data is still image data or video data. For example, during periods of time when no workers are present (e.g., as may be determined by the edge node 110 based on data from the cameras using the computer vision techniques described above), the edge node 110 may instruct, via the control signal, the cameras to transmit still image data periodically, such as once per minute. The edge node 110 may analyze the data provided by the cameras and upon detecting the presence of a worker within the environment where the machinery 402 is located, may provide a control signal to the cameras to switch to providing video data or providing still image data at a higher frequency (e.g., once per 5 ms).

As described above with reference to FIG. 1, the edge node 110 may include one or more machine learning models providing functionality for analyzing data provided by the cameras. In the exemplary worker safety use case illustrated in FIG. 4, the models may include one or more models configured to detect the presence of safety equipment for workers. For example, the model(s) may be trained to detect whether a worker is wearing eye protection, ear protection, gloves, a hardhat, a mask, or other safety equipment. Using these models, the edge node 110 may determine, based on analysis of the data provided by the cameras or other sensor devices, whether workers present in the environment where the machinery 402 is located are wearing all safety equipment required in order to use the machinery 402. The edge node 110 may transmit information to the controller 404 to control the operational state (e.g., enable, disable, slow down, etc.) of the machinery 402 based on whether one or more workers detected in the environment where the machinery 402 is located are wearing or are not wearing appropriate safety equipment (e.g., missing gloves, missing eye protection, and the like), as described in more detail below.

To further illustrate the concepts of the system 400 described above, the edge node 110 may utilize a computing architecture in accordance with the concepts disclosed herein, such as the computing architecture 200 of FIG. 2. In such an embodiment, sensor data (e.g., media content and other data) captured by the sensor devices 410-418 may be processed using a capture service (e.g., the capture service 210) executable by a CPU. Processing the sensor data may include various operations to prepare the sensor data for analysis by the model(s) of the edge node 110. For example, media content (e.g., frames of video data or image data) may be converted by the capture service into an array or matrix of numeric values representing the pixels representative of the media content (e.g., a numeric value representing to color or gray scale level of the pixels, luminance, and the like), normalization, down-sampling, scaling, or other processes that enable the media content to be converted to a form that may be input to the model(s) of the edge node 110. The processed sensor data may then be stored in a cache memory that is shared between the CPU and a GPU, which enables the processed sensor data to be retrieved for processing by the model(s) of the edge node.

The model(s) may be used to evaluate the retrieved sensor data via a GPU module of the edge node 110 (e.g., the GPU module 230 of FIG. 2) and the model(s) may output classifications (e.g., the classifications 222) based on evaluation of the cached media content. In the example worker safety scenario described above, the classifications may include classifications indicating whether or not the worker is detected, as well as classifications indicating whether one or more pieces of protective equipment (e.g., eye protection, ear protection, gloves, a hardhat, a mask, and the like) are or are not being worn by the worker. The classifications output by the model(s) may be stored in a cache memory and subsequently retrieved for analysis by control logic 440, which may be similar to the control logic 240 of FIG. 1. During analysis of the classifications, shown as "{A} {B} {C}" in FIG. 4, the control logic 440 may produce control data and analysis outcomes. In FIG. 4, the control data is shown as "{A1}{B1}{C1}" and the analysis outcomes are shown as "{A2}{B2}{C2}." The control data may be generated and stored in the cache memory as control logic outputs (e.g., the control logic outputs 224 of FIG. 2). It is noted that the classifications may include multiple sequences of data, such as classifications derived from multiple time-sequenced pieces of sensor data, and the control logic 440 may be configured to output control data and/or analysis outcomes based on the sequences of classification data.

The control data and analysis outcomes may be stored in the cache memory for subsequent processing by a message broker service (e.g., the message broker service 250 of FIG. 2) and/or storage in a database (e.g., the database 250 of FIG. 2) or a remote database (e.g., a database of the computing device 140 and/or the computing 160). The message broker service of the edge node 110 may be configured to generate one or more messages for transmission to the computing device 140 and/or the computing device 160, such as messages 420, 422, respectively. The message 420, 422 may provide information to users monitoring the environment, such as alerts to indicate workers are or are not wearing required protective equipment. In an aspect, the messages may be presented to the user in a textual format, such as to display a message indicating safety equipment is or is not being worn by one or more workers. The displayed message may only be changed when a change in the status of the safety equipment changes or the presence of workers changes. For example, as long as all detected workers are wearing appropriate safety equipment the message may indicate all worker complying with safety equipment requirements. If all workers leave the environment (or move a certain distance from the machinery 402), the message may be updated to indicate no workers in vicinity of the machinery 402. Similarly, the message may be updated to indicate when at least one worker in the vicinity of the machinery 402 is not wearing required safety equipment. In some aspects, a visible or audible alert may also be provided in certain circumstances, such as when a worker is detected in the vicinity of the machinery 402 that is not wearing all required safety equipment. In additional or alternative aspects, the information included in the messages 420, 422 may not be presented to the user in a textual format and may instead be presented as a color graphic or other visual indicator that may be displayed on a user interface (e.g., green when workers in the monitored environment are wearing all protective equipment or red when workers are not wearing one or more pieces of protective equipment). Other types of information may also be provided to the users via the messages 420, 422, such as a state of the machinery 402 (e.g., whether the machinery 402 is being operated, is disabled, etc.). It is noted that some of the information presented to the user via the graphical user interface may be provided based on information stored in a database local to the edge node 110, such as the database 250 of FIG. 2, as described above.

Additionally, the messages 420, 422 may also be used to store information at a remote database, such as to store information regarding the analysis outcomes (e.g., "{A2 B2 C2}") and/or the sensor data (e.g., A1-Aₙ, B1-Bₙ, C1-Cₙ, etc., or portions thereof) at a remote database (e.g., a database maintained at the computing device 140 or the computing device 160). In some aspects, the sensor data may only be stored in the local and/or remote database when certain events occur, such as a state change with respect to the worker's safety equipment (e.g., one or more pieces of media content upon which a determination was made that the worker(s) is or is not wearing required safety equipment, a worker has been detected in the vicinity of the machinery 402, etc.). In this manner the volume of data stored at the remote or local database(s) may be minimized while retaining a record of the state of certain key features being monitored within an environment. Similarly, control data may also be stored in the database(s) based on key events, such as when the machinery 402 is enabled, disabled, slowed, etc. based on the state of workers and their safety equipment. The records stored at the database(s) may be timestamped to enable time sequencing of the data, such as to enable a piece of media content to be associated with a control signal transmitted to the controller 404, which may enable a user of the computing device 140 or the computing device 160 to review the control signals and associated media content from which the control signals were generated at a later time, such as during a safety or system audit.

In addition to the messages 420, 422, the message broker of the edge node 110 may also provide control signals 424 to the controller 404 to control the operational state (e.g., enable, disable, slow down, etc.) of the machinery 402 based on the analysis by the control logic 440. For example, in the above-example involving a drill press, the edge node 110 may provide the control signals 424 to the controller 404 to control operations the drill press. The control signals may be generated based on application of the logic parameters 442 of the control logic 440 to the classifications output by the model(s). The logic parameters 442 may be configured to determine whether the drill press is being operated in a safe or unsafe manner based on the outputs of the model(s), and the control signals 424 may include commands to slow or stop the drill press, a command to generate an auditory alert to the drill press operator, or other types of operations to address any unsafe operating conditions detected by the control logic 440. For example, logic parameters 442 are shown in FIG. 4 as including a plurality of logic parameters L₁-L_{z}. Certain ones of the logic parameters 442 may be used to evaluate whether the worker is or is not wearing safety equipment (e.g., helmet, eye protection, ear protection, etc.) based on the classifications output by a first model (e.g., classifications {A}), other ones of the logic parameters 442 may be used to evaluate whether the worker is or is not wearing other pieces of safety equipment (e.g., gloves) based on the classifications output by a second model (e.g., classifications {B}), and other logic parameters may be configured to evaluate other aspects of the monitored environment (e.g., whether workers present in the environment, whether a worker is close to certain components of the machinery 402, etc.) based on classifications by another model (e.g., classifications {C}).

For example, a first set of the logic parameters 442 may be used to determine whether workers are present in the environment and that required pieces of safety equipment are being worn and a second set of the logic parameters 442 may then determine whether to generate control signals based on the outputs of the evaluation by the certain logic parameters. Exemplary pseudocode illustrating aspects the first and second set of logic parameters described above is shown below:

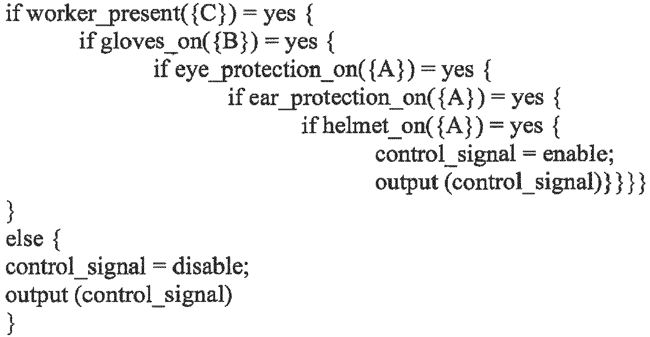

In the exemplary pseudocode above, worker_present() represents a logic parameter that uses classifications {C} as an input to determine whether a worker is present in the monitored environment; gloves_on() represents a logic parameter that uses classifications {B} as an input to determine whether gloves are being worn; and eye_protection_on(), ear_protection_on(), helmet_on() represent logic parameters that use classifications {A} as an input to determine whether eye protection, ear protection, and helmets are being worn. As can be appreciated from the pseudocode above, if no worker is present in the monitored environment (e.g., "if worker_present({C})" evaluates to no) the "else" statement is executed, which sets the "control_signal" variable to "disable" and outputs the "control_signal" variable (e.g., a control signal 424 is transmitted to controller 404 to disable the machinery 402). If a worker is present in the monitored environment (e.g., "if worker_present({C})" evaluates to yes), the nested "if' statements are executed to confirm that required safety equipment is being worn by the worker(s). If gloves_on(), eye_protection_on(), ear_protection_on(), or helmet on() evaluates to "no", the "else" statement may be executed as described above. However, if gloves _on(), eye_protection_on(), ear_protection_on(), or helmet_on() evaluates to "yes" (i.e., all required safety equipment is being worn by the worker(s)), the "control signal" variable is set to "enable" and output (e.g., a control signal 424 is transmitted to controller 404 to enable the machinery 402). In this manner, if a worker is not present or any piece of safety equipment is missing, a control signal 424 will be sent to the machinery 402 to disable operation of the machinery 402, and the machinery will only be enabled if a worker is present and all required safety equipment is detected.

To reduce the number of control signals transmitted by the edge node 110, the pseudocode could be modified to maintain state information and only send the control signal if the state of the machinery 402 is changing. For example:

```
      if worker_present({C}) = yes {
             if gloves_on({B}) = yes {
                   if eye_protection_on({A}) = yes {
                         if ear_protection_on({A}) = yes {
                                if helmet_on({A}) = yes {
                                      if state = disabled {
                                            control_signal = enable;
                                            state = enabled;
                                            output (control_signal)} } } } }
      }
      else {
      if state = enabled {
             control_signal = disable;
             state = disabled;
             output (control_signal)}}
```

Using the modified pseudocode above, which maintains state information, the state of the machinery 402 is checked and the control signals are only sent when there is a state change. For example, if a worker is present and all required safety equipment is being worn then the machinery 402 should be in the enabled state. The "if state = disabled" checks to see if the current state of the machinery 402 is disabled, and if disabled (e.g., "if state = disabled" is true), the state is set to enabled, the control_signal variable is set to enable, and the control_signal is output. Similarly, if a worker is not present or all required safety equipment is being worn, the machinery 402 should be in the disabled state. In the "else" clause, the state is first checked to see if the machinery 402 is already in the enabled state, and if enabled, the control_signal variable is set to disable, the state variable is set to disabled, and the control_signal is transmitted to the controller 404. In this manner, the number of control signals transmitted by the edge node 110 may be reduced. It is noted that the exemplary pseudocode described above has been provided for purposes of illustration, rather than by way of limitation and that other techniques may be used to evaluate the classifications and generate control signals in accordance with the concepts disclosed herein. It is noted that the control signals 424 may be transmitted to the controller 404 by a message broker service of the edge node 110 via an edge communication link, as described above.

It is noted that while control logic 440 is shown in FIG. 4 as analyzing or evaluating 3 different types of classifications (e.g., classifications {A} {B} {C}), control logic 440 may be configured to analyze or evaluate less than 3 types of classifications or more than 3 different types of classifications if desired depending on the particular use case involved and the configuration of the control logic and/or models of the system 400. Furthermore, it is noted that the control logic 440 may include logic parameters 442 that evaluate information other than classifications. For example, in addition to monitoring the environment to ensure that workers are only able to operate the machinery 402 when wearing required safety equipment, the edge node 110 may provide other types of functionality for monitoring worker safety. For example, suppose that the worker is operating the machinery 402 for a period of time and takes off his/her helmet while operating the machinery 402. By analyzing the data provided by the cameras (e.g., one or more of the sensor devices 410-418) over time using the processing described above, the edge node 110 may detect that the worker has taken the helmet off and may transmit a control signal 424 to the controller 404 to turn off the machinery 402. As described above, due to the computing architecture disclosed herein, the determination that the worker took the helmet off may be made in fractions of a second, thereby ensuring that the control signal 424 to turn the machinery 402 off may occur very soon after the worker takes the helmet off, which may prevent an accident or injury while the worker's helmet is off. If the worker puts the helmet back on, the edge node 110 may again detect that the worker is wearing the appropriate safety equipment and provide a control signal 424 to the controller 404 that enables operation of the machinery 402 to controller 404. As described above, the determinations to transmit the control signals 424 in response to the worker removing or putting back on the helmet may be generated based on analysis of the outputs of the model(s) (e.g., the classifications) by the control logic 440, and multiple outputs may be generated by the control logic (e.g., the control data and analysis outcomes).

As another example, suppose that the machinery 402 is intended to be operated by a worker that is not wearing gloves (e.g., to provide improved interaction with certain controls of the machinery 402 that may be impeded when the worker is wearing gloves). Suppose that the worker is operating the machinery 402 and then puts on a pair of gloves to pick up an item the worker is working on (e.g., a welded item) and reposition the item for further processing using the machinery 402 or to start working on a new item. The edge node 110 may detect that the user has put on gloves and may transmit a control signal to turn the machinery 402 off. When the worker finishes repositioning the item or has positioned the new item appropriately, the worker may then remove the gloves. The edge node 110 may detect the worker has removed the gloves and provide a control signal to the controller 404 that places the machinery 402 back in the operational state, thereby allowing the worker to continue using the machinery 402.

In addition to models for detecting whether the worker is wearing safety equipment, the models of the edge node 110 may also be configured to provide computer vision-based functionality for monitoring other aspects of worker safety. For example, the models of the edge node 110 may include models configured to detect whether the worker is using the machinery 402 in a safe manner, such as to detect whether a portion of the worker's body (e.g., hands, legs, arms, etc.) is close to one or more moving parts of the machinery 402 (e.g., a saw blade, a drill bit of a drill press, and the like). If the edge node 110 detects that the machinery 402 is being operated in an unsafe manner by the worker, the edge node 110 may provide a control signal to the controller 404 to turn off a particular portion of the machinery 402 (e.g., stop rotation or oscillation of a saw blade, etc.) or turn off the machinery 402 completely. In some aspects, the edge node 110 may provide control signals to the controller 404 that may be used to provide feedback to the worker regarding detection of unsafe operation of the machinery 402. For example, where the machinery 402 is a saw, a first control signal may be transmitted from the edge node 110 to the controller 404 to change a characteristic of the rotation or oscillation of the saw blade, such as to slow down the saw blade or to pulse the saw blade (e.g., speed up and slow down the saw blade multiple times). The changing of the characteristic of the rotation or oscillation of the saw blade may inform the worker of an unsafe operating condition, such as to indicate that the worker's hand(s) are approaching a position considered too close to the blade (e.g., once the worker's hand(s) reach the position deemed too close to the blade the saw may be turned off) or that another worker is present in the environment in the vicinity of the machinery 402.

As an additional example, the models of the edge node 110 may include a model configured to detect movement of workers in the environment where the machinery is located, and the control logic 440 may be configured to selectively turn off the machinery 402 based on detection of the worker. For example, in FIG. 4, a region 406 surrounding the machinery 402 is shown. The region 406 may be an area surrounding the machinery 402 that corresponds to a space where workers are typically located when using the machinery 402. The model(s) of the edge node 110 may be configured to determine whether a worker is present in the region 406 or not and provide control signals to the controller 404 to enable/disable the machinery 402 based on the presence of the worker in the region 406. For example, suppose that a worker wearing all required PPE is present in the region 406 and using the machinery 402, but then leaves the region 406 (e.g., to obtain additional material(s) for use with the machinery 402 or some other reason). The model may classify video data received from one or more of the sensor devices as indicating the worker has left the region 406 and the control logic of the edge node 110 may determine to send a control signal to the controller 404 to turn off the machinery 402 based on detecting the worker is not present at the machinery 402 (e.g., not within the region 406). If the worker subsequently returns to the region 406, the video data received from one or more of the sensors may be classified by the model(s) as indicating the worker is present in the region 406 and the control logic may determine to send a control signal to the controller 404 to enable the machinery 402 to be turned on again. It is noted that the models of the edge node 110 may worker in a coordinated manner, rather than in isolation. To illustrate, in the example above the models of the edge node 110 may also determine whether the worker is wearing all of the PPE required for using the machinery 402. If the worker is wearing the PPE, the control logic may determine that the worker is present in the region 406 and is wearing the required PPE and provide the control signal to enable the machinery 402, but if the worker is not present in the region 406 or is not wearing all required PPE upon returning to the region 406, the control logic may not enable operation of the machinery 402.

In addition to monitoring worker safety, the exemplary configuration of the system 400 of FIG. 4 may also be utilized to facilitate other types of use cases from Table 1 above. For example, the system 400 may also include capabilities to perform operations supporting predictive maintenance and/or remote diagnostics. In particular, the sensor devices 410-418 may include acoustic sensors, temperature sensors, pressure sensors, or other types of sensors that may be used to monitor performance of the machinery 402. Information received from such sensors may be provided to one or more models of the edge node 110 for analysis, such as to determine if sounds picked up by the acoustic sensors indicate potential problems with bearings of the machinery 402 (e.g., a squeaking noise is detected), detecting overheating conditions based on temperature data received from temperature sensors, or other types of abnormalities that may be detected by models of the edge node 110. The control logic 440 may be configured to provide control signals 424 to the controller 404 to turn off the machinery 402 and/or to a user of the computing devices 140, 160 when a potential issue related to performance and/or operation of the machinery 402 is detected (e.g., to prevent further damage or failure of the machinery 402 or potential injury resulting from the damage or failure, as well as notify maintenance personnel associated with one of the computing devices 140, 160).

Additionally, the control logic 440 may provide a notification to the computing device 140 and/or the computing device 160 indicating the detection of a problem condition with respect to operation of the machinery 402. For example, the computing device 140 may be associated with maintenance personnel and the notification may indicate that a potential problem has been detected with respect to the machinery 402. The notification may include information associated with a predicted problem with the machinery 402, which may be predicted based on a classification of the sensor data by the one or more models. The maintenance personnel may subsequently inspect the machinery 402 to confirm the existence of a problem with the machinery 402 and make any necessary repairs. As described above, information associated with the analysis performed by the edge node 110 may also be stored in a database and presented to a user via a graphical user interface, such as a graphical user interface presented at a display device associated with the computing device 140 and/or a display device associated with the computing device 160. Presenting the information at the graphical user interface may facilitate real-time monitoring of the environment where the machinery 402 is located. The graphical user interface may also enable the user to view historic information associated with the environment where the machinery 402 is located, as described above.

In addition to utilizing the computing architectures disclosed herein to achieve low-latency control and messaging, the edge node 110 may utilize additional techniques to improve the flow and processing of data, which may further improve the low latency capabilities of the edge node 110. For example, prioritization techniques may be utilized to prioritize memory cache streams and control priority of computing and processing resources of the edge node 110. As explained above, the edge node 110 may provide functionality to support different workflows and capabilities, such as processes to condition sensor data for ingestion by the model(s), evaluating the conditioned sensor data by the model(s), evaluation of classifications generated by the model(s) by the control logic, and transmission of control signals and messages. The prioritization techniques may include multiple priority levels for different processing and data streams. For example, the priority levels may include 3 priority levels: high, medium, and low. High priority levels may be associated with critical (e.g., in terms of latency or information) workflows and capabilities, such as data ingestion and model object detection and classification. Medium priority levels may be associated with streams currently being used to process important workflows that do not require a lot of processing time (e.g., important micro tasks) and/or do not get a hold of the resource for a long time, such as applying control logic 440 to classification data to extract meaningful outcomes. Low priority levels may be associated with processes that do not require or mandate a real-time "ultra-low latency" action or processing. As a non-limiting example, the 3 priority levels may be applied in the above-described use case as follows: low priority may be assigned to processes and streams used to store data to a local and/or remote database, serve data to dashboards (e.g., provide data to GUIs or other devices via APIs, data syncs, etc.), or other tasks (e.g., workflows and processes related to analysis of sensor data related to performance of the machinery 402, which may be useful but lower priority than worker safety processes); medium priority may be assigned to processes for evaluating classification data for detection of worker safety issues and conditioning and modelling processes for processing ; and high Priority may be used for processing ingesting sensor data, pre-processing the sensor data for analysis by the models, and evaluating the processed or conditioned data by the models. As explained above with reference to FIG. 2, other assignments of the priority levels and/or dynamic assignment of the priority levels may be utilized if desired.

As shown above, systems incorporating edge nodes configured in accordance with the computing architectures and techniques disclosed herein enable monitoring of environments via analysis of data streams provided by various sensors using one or more machine learning models. The machine learning models may characterize or classify events occurring within the monitored environment based on the information included in the data streams and control logic may evaluate the events occurring within the environment based on the outputs of the machine learning models to provide feedback to the monitored environment (e.g., to control operations of machinery or other devices in the monitored environment) and/or users associated with the monitored environment (e.g., workers within the environment, maintenance personnel, a supervisor, and the like). Due to the utilization of edge nodes for analysis of the data streams and the computing architectures of the present disclosure, the feedback (e.g., the messages 420, 422 and the control signals 424) may be provided in real-time or near-real-time (if desired), which may prevent injury to individuals within the environment (e.g., in a worker safety use case) and/or mitigate a likelihood of damage or failure of machinery and equipment within the environment (e.g., in a predictive maintenance and/or remote diagnostics use case).

It is noted that while FIG. 4 shows the system 400 as including a single edge node 110 and one piece of machinery 402, the system 400 may be readily implemented with more than one edge node 110 and more than one piece of machinery 402. Moreover, it should be understood that the system 400 may also be implemented with additional sensors and/or types of sensors than those described above and that the edge nodes 110 may be configured with other types of models and control logic suitable for a desired set of monitoring and control operations. Accordingly, it is to be understood that the exemplary details regarding the system 400 described above have been provided for purposes of illustration, rather than by way of limitation and that the system 400 may include less devices (e.g., less sensors, computing devices, etc.), more devices (e.g., more sensors, computing devices, etc.), different devices, and/or be used to support other use cases and operations depending on the particular needs of the environment being monitored and the use cases involved.

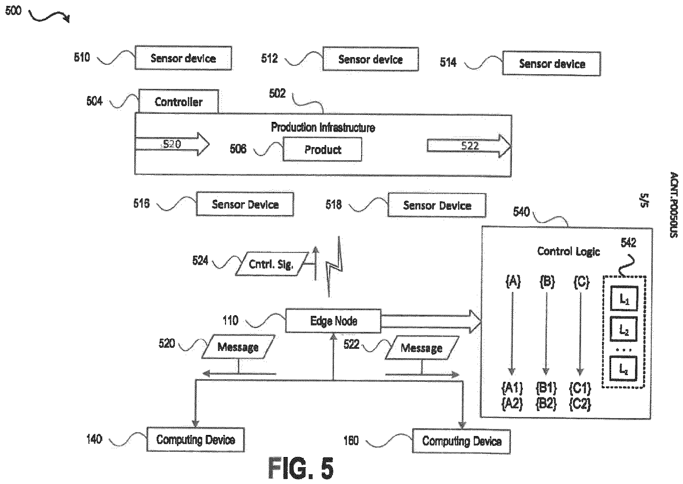

Referring to FIG. 5, a block diagram illustrating another exemplary system for monitoring an environment using edge node computing architectures in accordance with aspects of the present disclosure is shown as a system 500. The system 500 may be designed to monitor an environment in which various manufacturing processes take place or other environments where items are moved (e.g., warehouse facilities, packaging facilities, and the like). As shown in FIG. 5, the system 500 includes the edge node 110, computing device 140, and computing device 160 of FIG. 1. The system 500 also includes sensor devices 510, 512, 514, 516, 518, which may include cameras, proximity sensors, temperature sensors, motion sensors, or other types of sensors and devices.

The sensors 510-518 may be configured to monitor various portions of a production infrastructure 502. The production infrastructure 502 may include components or machinery to facilitate movement of items or products 506 in the direction shown by arrows 520, 522 (e.g., from left to right in FIG. 5), such as conveyors, rollers, robotic arms or assemblies, and the like. As the products 506 are moved along various stages of the production infrastructure 502 the sensors 510-518 may capture various types of data that may be provided to the edge node 110 for analysis using the computing architectures of the present disclosure. To illustrate, camera sensors may provide media content (e.g., video and/or image data streams) to the edge node 110 for analysis. The edge node 110 may utilize one or more models to analyze the media content and the model(s) may be trained to detect and/or identify defects or other types of issues (e.g., dents, scratches, cracks, misaligned components, and the like) as the products move through the production infrastructure 502. In such an implementation, the one or more models may include different models for different types of defects or issues (e.g., one or more models for scratches, one or more models for cracks, one or more models for dents, and so on) or some of the models may be configured to detect multiple types of defects (e.g., a model configuration to detect scratches and cracks).

The model(s) of the edge node 110 and/or the control logic 540 may additionally or alternatively be configured to determine a cause of at least some of the defects identified by the edge node 110. For example, the production infrastructure 502 may involve heating and/or cooling processes and certain types of defects may be more prevalent when the heating and/or cooling processes occur too rapidly or result in temperatures that too high or too low for current environmental conditions (e.g., ambient temperature, humidity, etc.). The sensors 510-518 may include devices that provide environmental data regarding the environment where the production infrastructure (or a portion thereof) is located, such as ambient temperature data, humidity data, temperature data associated with heating or cooling processes, temperature data associated with products moving through the production infrastructure, and the like. The environmental data may be analyzed by the model(s) and/or the control logic to predict causes of one or more types of defects. For example, if one or more of the models classify detected defects as cracks, another model and/or the control logic may evaluate the environmental data to determine whether a cooling process is occurring too rapidly or slowly (e.g., due to a temperature of the cooling processes being too cold or too hot or because a conveyor is moving the product(s) through the cooling process too slow or fast). When a potential cause for the cracks is determined based on the environmental data, one or more of the messages 520, 522 may be provided to the computing devices 140, 160 to indicate the cause of identified defects. In an aspect, one or more of the messages 520, 522 transmitted by the edge node 110 may include other types of information, such as information that indicates a possible cause of the detected or predicted defects (e.g., the defect is being caused by one or more processes or functionality of the production infrastructure 502, other environmental conditions, and the like). As described above with reference to FIGs. 2 and 4, the messages 520, 522 may be transmitted by a message broker service of the edge node 110 (e.g., the message broker service 250 of FIG. 2).

In some aspects, control signals 524 may also be sent to one or more controller devices 504, which may be configured to control operations of the production infrastructure 502. To illustrate, a control signal 524 may be sent to a controller 504 configured to control a cooling temperature used by a cooling process of the production infrastructure 502 to modify the temperature (e.g., increase or decrease the temperature) of the cooling process. Additionally or alternatively, a control signal 524 may be provided to a controller 504 configured to control a rate or speed at which products are moved through the cooling process (e.g., to speed up or slow down the cooling process). Other types of control signals 524 may also be provided to controllers 504 of the production infrastructure to minimize further occurrences of defects detected by the edge node 110. In additional or alternative aspects, the messages 520, 522 transmitted to one or more of the computing devices 140, 160 may include recommended modifications to the operations of the production infrastructure 502 and the control signals 524 may be provided to the controller(s) 504 by the computing device(s) after review by a user, such as in response to inputs provided by the user to a graphical user interface (e.g., a dashboard or other application).

Using the system 500, users of the computing devices 140, 160 may monitor the production infrastructure 502 and receive information in real-time or near-real-time (e.g., less than 100 ms, less than 75 ms, less than 50 ms, approximately 30 ms, etc.) regarding defects or other abnormalities detected with respect to products moving through the production infrastructure 502. Moreover, the functionality provided by the edge node 110 of the system 500 may enable actions to mitigate detected defects and anomalies to be implemented automatically (e.g., via control signals provided from the edge node(s) 110 to the controller(s) 504) or recommendations regarding actions to mitigate detected defects and anomalies to be provided to the users of the computing devices 140, 160. Using such capabilities may enable the production infrastructure 502 to be controlled and operated in a more efficient manner and enable mitigation of defects or other issues to be addressed more quickly as compared to currently available production management solutions. Moreover, in some implementations the models of the edge node(s) 110 may be configured to predict the occurrence of defects or other production anomalies prior to the widespread occurrence of the defects based on information provided by one or more of the sensor devices 510-518, which may enable mitigation actions to be implemented (automatically or at the direction of the user(s)) in a pre-emptive, rather than reactive manner.

To further illustrate the concepts of the system 500 described above, the edge node 110 may utilize a computing architecture in accordance with the concepts disclosed herein, such as the computing architecture 200 of FIG. 2. In such an embodiment, sensor data (e.g., media content and other data) captured by the sensor devices 510-518 may be processed using a capture service (e.g., the capture service 210) executable by a CPU. Processing the sensor data may include various operations to prepare the sensor data for analysis by the model(s) of the edge node 110. For example, media content (e.g., frames of video data or image data) may be converted by the capture service into an array or matrix of numeric values representing the pixels representative of the media content (e.g., a numeric value representing to color or gray scale level of the pixels, luminance, and the like), normalization, down-sampling, scaling, or other processes that enable the media content to be converted to a form that may be input to the model(s) of the edge node 110. In some aspects, temperature data or other types of non-media content data (e.g., pressure data, humidity data, etc.) received from the sensor devices 510-518 by the capture service may also be processed (e.g., rounded, normalized, etc.). In additional or alternative aspects, these other types of sensor data may simply be stored in the cache memory without any processing (e.g., because the sensor data may already be in format suitable for use by the models, such as numeric data). As described above, the cache memory may be shared by processes utilizing the computing resources of the CPU and a GPU, such as the capture service, a GPU module, and the control logic 540, which enables the sensor data to be stored by the capture service and retrieved for processing by the GPU module more quickly.

As in the examples described above, the model(s) of the GPU module may be used to evaluate the retrieved sensor data, and one or more classifications may be output based on evaluation of the cached media content. In the example use case above where the system 500 is used to monitor the production infrastructure 502, the classifications may include classifications indicating whether defects are or are not detected, as well as other types of classifications associated with the processes of the production infrastructure 502, such as classifications associated with a speed at which products are moving through the production infrastructure 502, temperature classifications (e.g., classification of temperatures of cooling or heating processes, ambient environment temperatures, and the like), or other classifications. The classifications output by the model(s) may be stored in the cache memory and may be subsequently retrieved for analysis by control logic 540, which may be similar to the control logic 240 of FIG. 2 and the control logic 440 of FIG. 4. During analysis of the classifications, shown as "{A} {B} {C}" in FIG. 5, the control logic 540 may produce control data and analysis outcomes, shown in FIG. 5 as "{A1}{B1}{C1}" and "{A2}{B2}{C2}", respectively. The control data and analysis outcomes may be stored in the cache memory as control logic outputs (e.g., the control logic outputs 224 of FIG: 2). It is noted that the classifications may include multiple sequences of data, such as classifications derived from multiple time-sequenced pieces of sensor data, and the control logic 540 may be configured to output control data and/or analysis outcomes based on the sequences of classification data.

The control data and analysis outcomes may be subsequently retrieved from the cache memory for processing by a message broker service (e.g., the message broker service 250 of FIG. 2) and/or stored in a database local to the edge node 110 (e.g., the database 250 of FIG. 2) or a remote database (e.g., a database of the computing device 140 and/or the computing 160). The message broker service of the edge node 110 may be configured to generate one or more messages for transmission to the computing device 140 and/or the computing device 160, such as the messages 520, 522, respectively. The messages 520, 522 may provide information to users monitoring the environment, such as alerts to indicate defects or improper process parameters (e.g., temperature, speed, etc.) have been detected. In an aspect, the messages may be presented to the user in a textual format, such as to display a message indicating defects are or are not being detected. In an aspect, the displayed message(s) may only change when a change in the status of detection of defects changes. For example, as long as no defects are detected the message may indicate no defects detected, but may be changed when a defect is detected. Similar messages may be displayed for other aspects of the production infrastructure 502 being monitored by the edge node 110. In some aspects, one or more visible or audible alerts may be provided, rather than or in addition to a textual alert (e.g., green to indicate no defects and/or all processes operating within tolerable ranges, and red to indicate defects present and/or one or more processes operating outside of tolerable ranges). It is noted that some of the information presented to the user via the graphical user interface may be provided based on information stored in a database local to the edge node 110, such as the database 250 of FIG. 2, as described above.

Additionally, the messages 520, 522 may also be used to store information at a remote database, such as to store information regarding the analysis outcomes (e.g., "{A2 B2 C2}") and/or the sensor data (e.g., A1-Aₙ, B1-Bₙ, C1-Cₙ, etc., or portions thereof) at a remote database (e.g., a database maintained at the computing device 140 or the computing device 160). In some aspects, the sensor data may only be stored in the local and/or remote database when certain events occur, such as to store one or more pieces of media content upon which a determination was made that a defect has occurred). In this manner the volume of data stored at the remote or local database(s) may be minimized while retaining a record of the state of certain key features being monitored within an environment. Similarly, control data may also be stored in the database(s) based on key events, such as when defects are detected or operations of the production infrastructure 502 are outside of tolerable ranges. The records stored at the database(s) may be timestamped to enable time sequencing of the data, such as to enable a piece of sensor data to be associated with a control signal transmitted to the controller 504, which may enable a user of the computing device 140 or the computing device 160 to review the control signals and associated sensor data from which the control signals were generated at a later time, such as during a system or performance audit.

In addition to the messages 520, 522, the message broker of the edge node 110 may also provide control signals 524 to the controller 404 to control operations of the production infrastructure 502 based on the analysis by the control logic 540. To illustrate, in the above-example involving monitoring the production infrastructure 502 for defects, the edge node 110 may provide the control signals 424 to the controller 504 to control operations the production infrastructure 502. The control signals 524 may be generated based on application of the logic parameters 542 of the control logic 540 to the classifications output by the model(s). The logic parameters 542 may be configured to determine whether defects are present, whether operational parameters are within tolerable ranges, or other features related to the production infrastructure 502. For example, the logic parameters 542 are shown in FIG. 5 as including a plurality of logic parameters L₁-L_{z}. Certain ones of the logic parameters 542 may be used to evaluate whether certain defects are present in products moving through the production infrastructure 502 based on the classifications output by a first model (e.g., classifications {A}), other ones of the logic parameters 542 may be used to evaluate whether the production infrastructure 502 is operating within tolerable ranges based on the classifications output by a second model (e.g., classifications {B}), and other logic parameters may be configured to evaluate other features of the production infrastructure 502 or potentially other types of use cases (e.g., predicting equipment failures, etc.) based on classifications by another model (e.g., classifications {C}). It is noted that while control logic 540 is shown in FIG. 5 as analyzing or evaluating 3 different types of classifications (e.g., classifications {A} {B} {C}), the control logic 540 may be configured to analyze or evaluate less than 3 types of classifications or more than 3 different types of classifications if desired depending on the particular use case involved and the configuration of the control logic and/or models of the system 500. Furthermore, it is noted that a prioritization scheme may be utilized to further optimize the functionality provided by the edge node 110 and reduce latency within the system 500, as described in more detail above with reference to FIGs. 2 and 4.

While the description of FIGs. 4 and 5 above illustrate features provided by the computing architectures and edge nodes of the present disclosure with respect to several of the use cases from Table 1 above, it should be understood that the description of FIGs. 4 and 5 are provided for purposes of illustration, rather than by way of limitation and should not be understood to be an exhaustive description of how edge nodes and the computing architectures disclosed herein may be utilized with respect to the illustrated use cases. Furthermore, while FIGs. 4 and 5 show a single edge node 110, it is to be understood that more than one edge node 110 may be utilized depending on the particular use case(s), the number of sensor devices, the features of the system or environment being monitored, or other factors. For example, in a system incorporating edge nodes in accordance with the computing architectures disclosed herein (e.g., the system 100 of FIG. 1, the system 400 of FIG. 4, the system 500 of FIG. 5, or another system) different portions of the monitored environment (e.g., stages of the production infrastructure 502 of FIG. 500) may be associated with a different edge node, thereby providing dedicated edge nodes for each different portion of the monitored environment. Additionally or alternatively, edge nodes may be associated with multiple portions of the monitored environment, which may reduce the number of edge nodes needed to support a particular use case. Furthermore, sensor devices utilized to capture data that is provided to the edge nodes may be specific to one edge node (e.g., each sensor device only provides its data to one edge node), may support multiple edge nodes (e.g., one or more of the sensor devices may provide data to multiple edge nodes), may support all edge nodes (e.g., one or more of the sensor devices may provide data to all edge nodes), or combinations thereof (e.g., some sensor devices only provide data to one edge node, some sensor devices may provide data to multiple edge nodes, other sensor devices may provide data to all edge nodes).

In an aspect, sensor devices utilized by systems in accordance with the present disclosure may also be used to trigger analysis by the edge nodes. For example, in an asset tracking and warehouse management use case a sensor device (e.g., an RFID device) may detect items as they pass a certain location (e.g., an entry way to a warehouse, an aisle, a loading dock, etc.) and information associated with the detected items may be transmitted to an edge node(s). The edge node may then use media content received from other sensor devices (e.g., cameras) and models to track movement of the items to particular locations within the warehouse. Information associated with the locations of the items may then be stored in a database (e.g., a database stored at a memory of the computing device 140, the computing device 160, and/or another data storage device). It is noted that the description above where RFID devices are used as triggering events to detect movement of items has been provided by way of illustration, rather than by way of limitation and the asset tracking and warehouse management systems operating in accordance with the present disclosure may utilize different techniques to detect and track items.

Although the embodiments of the present disclosure and their advantages have been described in detail, it should be understood that various changes, substitutions and alterations can be made herein without departing from the spirit and scope of the disclosure as defined by the appended claims. Accordingly, the appended claims are intended to include within their scope such processes, machines, manufacture, compositions of matter, means, methods, or steps.

## Claims

1. A method (300) for monitoring and controlling remote devices and/or systems comprising:
receiving (310), via a capture service (210) executable by a first processor of an edge device (110), input data from one or more data sources, the input data comprising information associated with a monitored environment (406), one or more monitored devices (152; 402; 502), or both, wherein the first processor comprises a central processing unit, wherein the input data includes video stream data associated with one or more video streams captured by cameras disposed within the monitored environment, wherein each camera has a field of view that includes a remote device (402);
applying (320), by a modelling engine (120) executable by a second processor of the edge device (110), two or more machine learning models (232) to at least a portion of the input data to produce model output data (222), wherein the second processor comprises a graphics processing unit;
executing, by control logic (240) executable by the first processor, control logic against the model output data (222) to produce control data (224A);
generating, via a message broker service (250) executable by the first processor, at least one control message (252; 424; 524) based on the control data (224A), the control message (252; 424; 524) comprising one or more commands corresponding to the remote device (152; 404; 504); and
transmitting, by the message broker service (250), the at least one control message (252; 424; 524) to the remote device (152; 402; 502).

2. The method of claim 1, wherein the capture service (210), the control logic (240), and the message broker service (250) are each executed via one or more threads of the first processor in parallel, and wherein the modelling engine (120) is configured to apply each of the two or more machine learning models (232) via separate threads of the second processor operating in parallel.

3. The method of any one of the preceding claims, wherein the input data comprises one or more video streams (212; 214), wherein the capture service (210) is configured to process the one or more video streams (212; 214), and wherein processing the one or more video streams (212; 214) comprises:
generating, based on the input data, model input data comprising information representing content of each frame of video content of a corresponding one of the one or more video streams, wherein the model input data is compatible with at least one machine learning model of the two or more machine learning models (232); and
storing the model input data in a memory (114) of the edge device (110).

4. The method of claim 3, wherein the memory (114) comprises a cache memory (220) accessible to the first processor and the second processor, and wherein at least the portion of the input data used to produce model output data (222) corresponds to the model input data and is retrieved from the cache memory (220) by the modelling engine (120).

5. The method of any one of the preceding claims, wherein the two or more machine learning models (232) are configured to produce model output data (222) associated with the remote device (152; 402; 504), wherein each of the two or more machine learning models of the modelling engine (120) is configured according to a particular use case, and wherein at least one use case is associated with safe operation of the remote device (152; 402; 504), safety of a worker operating the remote device (152; 402), or both.

6. The method of any one of the preceding claims, wherein the control logic (240) is configured to produce outcome data (224B), the outcome data (224B) corresponding to information representative of an environment (406) from which the input data is obtained, and wherein the remote device (152; 492; 502) is located in the environment (406).

7. The method of any one of the preceding claims, wherein the input data is received via an edge communication link.

8. A non-transitory computer-readable storage medium storing instructions that, when executed by a plurality of processors, cause the plurality of processors to perform operations according to the method (300) of any of the preceding claims.

9. A system (100) comprising:
an edge device (110) comprising:
a memory (114);
a first processor (112) communicatively coupled to the memory (114), wherein the first processor comprises a central processing unit; and
a second processor (112) communicatively coupled to the memory (114), wherein the second processor comprises a graphics processing unit;
a capture service (210) executable by one or more threads of the first processor to receive input data from one or more data sources, the input data comprising information associated with a monitored environment (406), one or more monitored devices (152; 402; 502), or both, wherein the input data includes video stream data associated with one or more video streams captured by cameras disposed within the monitored environment, wherein each camera has a field of view that includes a remote device (402);
a modelling engine (120) executable by one or more threads of the second processor to apply two or more machine learning models (232) to at least a portion of the input data to produce model output data (222);
control logic (240) executable by one or more second threads of the first processor to evaluate the model output data (222) against logic parameters to produce at least control data (224A); and
a message broker service executable by one or more third threads of the first processor to:
generate at least one control message (252; 424; 524) based on the control data (224A), the control message (252; 424; 524) comprising one or more commands corresponding to a remote device (152; 402; 502); and
transmit the at least one control message to the remote device (152; 402: 502).

10. The system of claim 9, wherein the input data comprises one or more video streams (212; 214), and wherein the capture service is configured to:
process the one or more video streams (212; 214) to produce model input data, wherein the model input data comprises information representing content of each frame of video content of a corresponding one of the one or more video streams (212; 214), and wherein first model input data generated from a first video stream of the one or more video streams is compatible with a first machine learning model of the two or more machine learning models (232); and
store the model input data at the memory (114).

11. The system of claim 9 or 10, wherein the memory (114) comprises a cache memory (220), and wherein the modelling engine (120) is configured to retrieve at least the portion of the input data from the cache memory (220).

12. The system of any one of the preceding claims 9 to 11, wherein the one or more commands are configured to change a mode of operation of the remote device (152; 402), the change in the mode of operation comprising slowing a speed of operation of the remote device (152; 402), stopping the remote device (152; 402), increasing the speed of operation of the remote device (152; 402), turning off the remote device (152; 402), and turning on the remote device (152; 402).

13. The system of any one of the preceding claims 9 to 12, further comprising:
one or more sensor devices (150; 410-418; 510-518) disposed in an environment where the remote device (152; 402) is located, and wherein the input data is received by the capture service (210) from the one or more sensor devices (150; 410-418; 510-518) via an edge communication link, wherein the one or more sensor devices (150; 410-418; 510-518) comprise video cameras, imaging cameras, thermal cameras, temperature sensors, pressure sensors, ultrasound sensors, transducers, microphones, motion sensors, accelerometers, gyroscopes, or a combination thereof.

14. The system of claim 13, further comprising:
a computing device (140; 160) comprising a second memory and a third processor (142; 162), wherein the computing device (140: 160) is accessible to the edge device (110) via a non-edge communication link, and wherein the edge device (110) is configured to periodically store the control data (224A), outcome data (224B), or both to a historical database (146) maintained at the second memory (144), wherein the outcome data (224B) corresponds to information representative of an environment from which the input data is obtained, and wherein the edge device (110) stores the control data (224A), the outcome data (224B), or both at the historical database (146) maintained at the second memory (144) via the non-edge communication link.

15. The system of claim 14, further comprising:
a graphical user interface configured to present information generated by the modelling engine (120), the control logic (240), or both to a user, wherein a first portion of the information presented via the graphical user interface is stored at a database (260) stored in the memory (114) of the edge device (110), and wherein a second portion of the information presented via the graphical user interface is obtained from the historical database (146) maintained at the computing device (140; 160).

## Patentansprüche

1. Ein Verfahren (300) zur Überwachung und Steuerung von entfernten Vorrichtungen und/oder Systemen, umfassend:
Empfangen (310), über einen Erfassungsdienst (210), der von einem ersten Prozessor eines *Edge-Devices* (110) ausführbar ist, von Eingabedaten aus einer oder mehreren Datenquellen, wobei die Eingabedaten Informationen umfassen, die einer überwachten Umgebung (406), einer oder mehreren überwachten Vorrichtungen (152; 402; 502) oder beiden zugeordnet sind, wobei der erste Prozessor eine zentrale Verarbeitungseinheit umfasst, wobei die Eingabedaten Videostromdaten umfassen, die einem oder mehreren Videoströmen zugeordnet sind, die von Kameras erfasst werden, die innerhalb der überwachten Umgebung angeordnet sind, wobei jede Kamera ein Sichtfeld hat, das eine entfernte Vorrichtung (402) beinhaltet;
Anwenden (320), durch eine Modellierungs-Engine (120), die von einem zweiten Prozessor des *Edge-Devices* (110) ausgeführt werden kann, von zwei oder mehr maschinellen Lernmodellen (232) auf mindestens einen Teil der Eingabedaten um Modell-Ausgabedaten (222) zu erzeugen, wobei der zweite Prozessor eine Grafikverarbeitungseinheit umfasst;
Ausführen (*executing*), durch eine Steuerlogik (240), die durch den ersten Prozessor ausführbar ist, von Steuerlogik anhand der Modellausgabedaten (222) um Steuerdaten (224A) zu erzeugen,
Erzeugen, über einen Nachrichtenvermittlungsdienst (250), der durch den ersten Prozessor ausführbar ist, von mindestens einer Steuernachricht (252; 424; 524) auf der Grundlage der Steuerdaten (224A), wobei die Steuernachricht (252; 424; 524) einen oder mehrere Befehle umfasst, die der entfernten Vorrichtung (152; 404; 504) entsprechen; und
Übertragen, durch den Nachrichtenvermittlungsdienst (250), der mindestens einen Steuernachricht (252; 424; 524) an die entfernte Vorrichtung (152; 402; 502).

2. Das Verfahren nach Anspruch 1, wobei der Erfassungsdienst (210), die Steuerlogik (240) und der Nachrichtenvermittlungsdienst (250) jeweils über einen oder mehrere Threads des ersten Prozessors parallel ausgeführt werden, und wobei die Modellierungs-*Engine* (120) so konfiguriert ist, dass sie jedes der zwei oder mehr maschinellen Lernmodelle (232) über separate, parallel arbeitende Threads des zweiten Prozessors anwendet.

3. Das Verfahren nach irgendeinem der vorstehenden Ansprüche, wobei die Eingabedaten einen oder mehrere Videoströme (212; 214) umfassen, wobei der Erfassungsdienst (210) konfiguriert ist, um den einen oder die mehreren Videoströme (212; 214) zu verarbeiten, und wobei das Verarbeiten des einen oder der mehreren Videoströme (212; 214) Folgendes umfasst:
Erzeugen, auf der Grundlage der Eingabedaten, von Modelleingabedaten, die Informationen umfassen, die einen Inhalt jedes Einzelbildes des Videoinhalts eines jeweiligen Videostroms aus dem einen oder den mehreren Videoströmen darstellen, wobei die Modelleingabedaten mit mindestens einem maschinellen Lernmodell der zwei oder mehr maschinellen Lernmodelle (232) kompatibel sind; und
Speichern der Modelleingabedaten in einem Speicher (114) des *Edge-Devices* (110).

4. Das Verfahren nach Anspruch 3, wobei der Speicher (114) einen Cache-Speicher (220) umfasst, auf den der erste Prozessor und der zweite Prozessor zugreifen können, und wobei zumindest der Teil der Eingabedaten, der verwendet wird, um Modellausgabedaten (222) zu erzeugen, den Modelleingabedaten entspricht und durch die Modellierungs-*Engine* (120) aus dem Cache-Speicher (220) abgerufen wird.

5. Das Verfahren nach irgendeinem der vorstehenden Ansprüche, wobei die zwei oder mehr maschinellen Lernmodelle (232) konfiguriert sind, um Modellausgabedaten (222) zu erzeugen, die der entfernten Vorrichtung (152; 402; 504) zugeordnet sind, wobei jedes der zwei oder mehr maschinellen Lernmodelle der Modellierungs-*Engine* (120) entsprechend eines bestimmten Anwendungsfalls konfiguriert ist, und wobei zumindest ein Anwendungsfall dem sicheren Betrieb der entfernten Vorrichtung (152; 402; 504), der Sicherheit eines Arbeiters, der die entfernte Vorrichtung (152; 402) bedient, oder beidem zugeordnet ist.

6. Das Verfahren nach irgendeinem der vorstehenden Ansprüche, wobei die Steuerlogik (240) konfiguriert ist, um Ergebnisdaten (*outcome data*) (224B) zu erzeugen, wobei die Ergebnisdaten (224B) Informationen entsprechen, die für eine Umgebung (406) repräsentativ sind, aus der die Eingabedaten erhalten werden, und wobei sich die entfernte Vorrichtung (152; 492; 502) in der Umgebung (406) befindet.

7. Das Verfahren nach irgendeinem der vorstehenden Ansprüche, wobei die Eingabedaten über eine Edge-Kommunikationsverbindung empfangen werden.

8. Ein nicht-flüchtiges, computerlesbares Speichermedium, das Anweisungen speichert, die, wenn sie von einer Vielzahl von Prozessoren ausgeführt werden, die Vielzahl von Prozessoren dazu veranlassen, Operationen gemäß dem Verfahren (300) nach irgendeinem der vorstehenden Ansprüche auszuführen.

9. Ein System (100), das Folgendes umfasst:
einen *Edge-Device* (110), der Folgendes umfasst:
einen Speicher (114);
einen ersten Prozessor (112), der kommunikativ mit dem Speicher (114) verbunden ist, wobei der erste Prozessor eine zentrale Verarbeitungseinheit umfasst; und
einen zweiten Prozessor (112), der kommunikativ mit dem Speicher (114) verbunden ist, wobei der zweite Prozessor eine Grafikverarbeitungseinheit umfasst;
einen Erfassungsdienst (210), der von einem oder mehreren Threads des ersten Prozessors ausführbar ist, um Eingabedaten von einer oder mehreren Datenquellen zu empfangen, wobei die Eingabedaten Informationen umfassen, die einer überwachten Umgebung (406), einer oder mehreren überwachten Vorrichtungen (152; 402; 502) oder beiden zugeordnet sind, wobei die Eingabedaten Videostromdaten umfassen, die einem oder mehreren Videoströmen zugeordnet sind, die von Kameras erfasst werden, die innerhalb der überwachten Umgebung angeordnet sind, wobei jede Kamera ein Sichtfeld hat, das eine entfernte Vorrichtung (402) beinhaltet;
eine Modellierungs-*Engine* (120), die von einem oder mehreren Threads des zweiten Prozessors ausführbar ist, um zwei oder mehr maschinelle Lernmodelle (232) auf mindestens einen Teil der Eingabedaten anzuwenden, um Modellausgabedaten (222) zu erzeugen;
eine Steuerlogik (240), die von einem oder mehreren zweiten Threads des ersten Prozessors ausführbar ist, um die Modellausgabedaten (222) anhand logischer Parameter auszuwerten, um zumindest Steuerdaten (224A) zu erzeugen; und
einen Nachrichtenvermittlungsdienst, der von einem oder mehreren dritten Threads des ersten Prozessors ausgeführt werden kann, um Folgendes zu bewerkstelligen:
Erzeugen von mindestens einer Steuernachricht (252; 424; 524) auf der Grundlage der Steuerdaten (224A), wobei die Steuernachricht (252; 424; 524) einen oder mehrere Befehle umfasst, die einer entfernten Vorrichtung (152; 402; 502) entsprechen; und
Übertragen der mindestens einen Steuernachricht an die entfernte Vorrichtung (152; 402: 502).

10. Das System nach Anspruch 9, wobei die Eingabedaten einen oder mehrere Videoströme (212; 214) umfassen, und wobei der Erfassungsdienst konfiguriert ist, um Folgendes zu bewerkstelligen:
Verarbeiten des einen oder der mehreren Videoströme (212; 214), um Modelleingabedaten zu erzeugen, wobei die Modelleingabedaten Informationen umfassen, die einen Inhalt jedes Einzelbildes des Videoinhalts eines jeweiligen Videostroms aus dem einen oder den mehreren Videoströmen (212; 214) darstellen, und wobei erste Modelleingabedaten, die aus einem ersten Videostrom des einen oder der mehreren Videoströme erzeugt werden, mit einem ersten maschinellen Lernmodell der zwei oder mehr maschinellen Lernmodelle (232) kompatibel sind; und
Speichern der Modelleingabedaten im Speicher (114).

11. Das System nach Anspruch 9 oder 10, wobei der Speicher (114) einen Cache-Speicher (220) umfasst, und wobei die Modellierungs-*Engine* (120) konfiguriert ist, um zumindest den (einen) Teil der Eingabedaten aus dem Cache-Speicher (220) abzurufen.

12. Das System nach irgendeinem der vorstehenden Ansprüche von 9 bis 11, wobei der eine oder die mehreren Befehle konfiguriert sind, um eine Betriebsart der entfernten Vorrichtung (152; 402) zu ändern, wobei die Änderung der Betriebsart Folgendes umfasst: eine Verlangsamung einer Betriebsgeschwindigkeit der entfernten Vorrichtung (152; 402), ein Anhalten der entfernten Vorrichtung (152; 402), eine Erhöhung der Betriebsgeschwindigkeit der entfernten Vorrichtung (152; 402), ein Ausschalten der entfernten Vorrichtung (152; 402) und ein Einschalten der entfernten Vorrichtung (152; 402).

13. Das System nach irgendeinem der vorstehenden Ansprüche von 9 bis 12, das ferner Folgendes umfasst:
eine oder mehrere Sensorvorrichtungen (150; 410-418; 510-518), die in einer Umgebung angeordnet sind, in der sich die entfernte Vorrichtung (152; 402) befindet, und wobei die von der einen oder den mehreren Sensorvorrichtungen (150; 410-418; 510-518) ausgehenden Eingabedaten vom Erfassungsdienst (210) über eine *Edge-*Kommunikationsverbindung empfangen werden, wobei die eine oder die mehreren Sensorvorrichtungen (150; 410-418; 510-518) Videokameras, Bildkameras, Wärmekameras, Temperatursensoren, Drucksensoren, Ultraschallsensoren, Wandler, Mikrofone, Bewegungssensoren, Beschleunigungsmesser, Gyroskope oder eine Kombination davon umfassen.

14. Das System nach Anspruch 13, das ferner Folgendes umfasst:
eine Rechenvorrichtung (140; 160), die einen zweiten Speicher und einen dritten Prozessor (142; 162) umfasst, wobei die Rechenvorrichtung (140: 160) für den *Edge-Device* (110) über eine Nicht-*Edge*-Kommunikationsverbindung zugänglich ist, und wobei der *Edge-Device* (110) konfiguriert ist, um die Steuerdaten (224A), die Ergebnisdaten (224B) oder beide periodisch in einer historischen Datenbank (146) speichert, die im zweiten Speicher (144) unterhalten wird, wobei die Ergebnisdaten (224B) Informationen entsprechen, die für eine Umgebung repräsentativ sind, aus der die Eingabedaten erhalten werden, und wobei der *Edge-Device* (110) die Steuerdaten (224A), die Ergebnisdaten (224B) oder beide über die Nicht-*Edge-*Kommunikationsverbindung in der historischen Datenbank (146) speichert, die im zweiten Speicher (144) unterhalten wird.

15. Das System nach Anspruch 14, das ferner Folgendes umfasst:
eine grafische Benutzerschnittstelle, die konfiguriert ist, um einem Benutzer Informationen zu präsentieren, die von der Modellierungs-*Engine* (120), der Steuerlogik (240) oder beiden erzeugt wurden, wobei ein erster Teil der über die grafische Benutzerschnittstelle präsentierten Informationen in einer Datenbank (260) gespeichert ist, die im Speicher (114) des *Edge-Devices* (110) gespeichert ist, und wobei ein zweiter Teil der über die grafische Benutzerschnittstelle präsentierten Informationen aus der historischen Datenbank (146) erhalten wird, die in der Rechenvorrichtung (140; 160) unterhalten wird.

## Revendications

1. Un procédé (300) pour la surveillance et la commande de dispositifs et/ou de systèmes distants, comprenant le fait de :
recevoir (310), via un service de capture (210) exécutable par un premier processeur d'un dispositif périphérique (*edge device*) (110), des données d'entrée provenant d'une ou plusieurs sources de données, les données d'entrée comprenant des informations associées à un environnement surveillé (406), à un ou plusieurs dispositifs surveillés (152 ; 402 ; 502), ou aux deux, sachant que le premier processeur comprend une unité centrale de traitement, sachant que les données d'entrée comprennent des données de flux vidéo associées à un ou plusieurs flux vidéo capturés par des caméras disposées dans l'environnement surveillé, sachant que chaque caméra présente un champ de vision qui inclut un dispositif distant (402) ;
appliquer (320), par un moteur de modélisation (120) exécutable par un deuxième processeur du dispositif périphérique (110), deux ou plusieurs modèles d'apprentissage automatique (232) à au moins une partie des données d'entrée pour produire des données de sortie de modèle (222), sachant que le deuxième processeur comprend une unité de traitement graphique ;
exécuter, par la logique de commande (240) exécutable par le premier processeur, une logique de commande par rapport aux données de sortie de modèle (222) pour produire des données de commande (224A),
générer, via un service d'agent de message (250) exécutable par le premier processeur, au moins un message de commande (252 ; 424 ; 524) basé sur les données de commande (224A), le message de commande (252 ; 424 ; 524) comprenant une ou plusieurs commandes (*commands*) correspondant au dispositif distant (152 ; 404 ; 504) ; et de
transmettre, par le service d'agent de message (250), le ou les messages de commande (252 ; 424 ; 524) au dispositif distant (152 ; 402 ; 502).

2. Le procédé d'après la revendication 1, sachant que le service de capture (210), la logique de commande (240) et le service d'agent de message (250) sont chacun exécutés via un ou plusieurs fils d'exécution (*threads*) du premier processeur en parallèle, et sachant que le moteur de modélisation (120) est configuré pour appliquer chacun des deux ou plusieurs modèles d'apprentissage automatique (232) via des fils d'exécution distincts du deuxième processeur opérant parallèlement.

3. Le procédé d'après l'une quelconque des revendications précédentes, sachant que les données d'entrée comprennent un ou plusieurs flux vidéo (212 ; 214), sachant que le service de capture (210) est configuré pour traiter le ou les flux vidéo (212 ; 214), et sachant que le traitement du ou des flux vidéo (212 ; 214) comprend le fait de :
générer, sur la base des données d'entrée, des données d'entrée de modèle comprenant des informations représentant un contenu de chaque trame du contenu vidéo d'un flux vidéo correspondant parmi le ou les flux vidéo, sachant que les données d'entrée de modèle sont compatibles avec au moins un modèle d'apprentissage automatique parmi les deux ou plusieurs modèles d'apprentissage automatique (232); et de
stocker les données d'entrée du modèle dans une mémoire (114) du dispositif périphérique (110).

4. Le procédé d'après la revendication 3, sachant que la mémoire (114) comprend une mémoire cache (220) accessible au premier processeur et au deuxième processeur, et sachant que au moins la partie des données d'entrée utilisées pour produire des données de sortie de modèle (222) correspond aux données d'entrée de modèle et est récupérée dans la mémoire cache (220) par le moteur de modélisation (120).

5. Le procédé d'après l'une quelconque des revendications précédentes, sachant que les deux ou plusieurs modèles d'apprentissage automatique (232) sont configurés pour produire des données de sortie de modèle (222) associées au dispositif distant (152 ; 402 ; 504), sachant que chacun des deux ou plusieurs modèles d'apprentissage automatique du moteur de modélisation (120) est configuré selon un cas d'utilisation particulier, et sachant que au moins un cas d'utilisation est associé à un fonctionnement sûr du dispositif distant (152 ; 402 ; 504), à la sécurité d'un travailleur utilisant le dispositif distant (152 ; 402), ou aux deux.

6. Le procédé d'après l'une quelconque des revendications précédentes, sachant que la logique de commande (240) est configurée pour produire des données de résultat (*outcome data*) (224B), les données de résultat (224B) correspondant à des informations représentatives d'un environnement (406) à partir duquel les données d'entrée sont obtenues, et sachant que le dispositif distant (152 ; 492 ; 502) est situé dans l'environnement (406).

7. Le procédé d'après l'une quelconque des revendications précédentes, sachant que les données d'entrée sont reçues via une liaison de communication en périphérie (*edge communication link*).

8. Un support de stockage non transitoire lisible par ordinateur stockant des instructions qui, lorsqu'elles sont exécutées par une pluralité de processeurs, amènent la pluralité de processeurs à effectuer des opérations conformes à un procédé (300) d'après l'une quelconque des revendications précédentes.

9. Un système (100) comprenant :
un dispositif périphérique (*edge device*) (110) comprenant :
une mémoire (114) ;
un premier processeur (112) couplé de manière communicative à la mémoire (114), sachant que le premier processeur comprend une unité centrale de traitement ; et
un deuxième processeur (112) couplé de manière communicative à la mémoire (114), sachant que le deuxième processeur comprend une unité de traitement graphique ;
un service de capture (210) exécutable par un ou plusieurs fils d'exécution du premier processeur pour recevoir des données d'entrée à partir d'une ou plusieurs sources de données, les données d'entrée comprenant des informations associées à un environnement surveillé (406), un ou plusieurs dispositifs surveillés (152 ; 402 ; 502), ou les deux, sachant que les données d'entrée comprennent des données de flux vidéo associées à un ou plusieurs flux vidéo capturés par des caméras agencées dans l'environnement surveillé, sachant que chaque caméra présente un champ de vision qui inclut un dispositif distant (402) ;
un moteur de modélisation (120) exécutable par un ou plusieurs fils d'exécution du deuxième processeur pour appliquer deux ou plusieurs modèles d'apprentissage automatique (232) à au moins une partie des données d'entrée afin de produire des données de sortie de modèle (222) ;
une logique de commande (240) exécutable par un ou plusieurs deuxièmes fils d'exécution du premier processeur pour évaluer les données de sortie de modèle (222) par rapport à des paramètres logiques pour produire au moins des données de commande (224A) ; et
un service d'agent de message exécutable par un ou plusieurs troisièmes fils d'exécution du premier processeur pour :
générer au moins un message de commande (252 ; 424 ; 524) sur la base des données de commande (224A), le message de commande (252 ; 424 ; 524) comprenant une ou plusieurs commandes (*commands*) correspondant à un dispositif distant (152 ; 402 ; 502) ; et pour
transmettre le ou les messages de commande au dispositif distant (152 ; 402 : 502).

10. Le système d'après la revendication 9, sachant que les données d'entrée comprennent un ou plusieurs flux vidéo (212 ; 214), et que le service de capture est configuré pour :
traiter le ou les flux vidéo (212 ; 214) pour produire des données d'entrée de modèle, sachant que les données d'entrée de modèle comprennent des informations représentant un contenu de chaque trame du contenu vidéo d'un flux vidéo correspondant du ou des flux vidéo (212 ; 214), et sachant que les premières données d'entrée de modèle générées à partir d'un premier flux vidéo du ou des flux vidéo sont compatibles avec un premier modèle d'apprentissage automatique des deux ou plusieurs modèles d'apprentissage automatique (232) ; et pour
stocker les données d'entrée du modèle dans la mémoire (114).

11. Le système d'après la revendication 9 ou 10, sachant que la mémoire (114) comprend une mémoire cache (220), et sachant que le moteur de modélisation (120) est configuré pour récupérer au moins ladite partie des données d'entrée depuis la mémoire cache (220).

12. Le système d'après l'une quelconque des revendications précédentes de 9 à 11, sachant que la ou les commandes sont configurées pour modifier un mode de fonctionnement du dispositif distant (152 ; 402), la modification du mode de fonctionnement comprenant le fait de ralentir une vitesse de fonctionnement du dispositif distant (152 ; 402), arrêter le dispositif distant (152 ; 402), augmenter la vitesse de fonctionnement du dispositif distant (152 ; 402), éteindre le dispositif distant (152 ; 402), et de mettre en marche le dispositif distant (152 ; 402).

13. Le système d'après l'une quelconque des revendications précédentes de 9 à 12, comprenant en outre :
un ou plusieurs dispositifs de détection (150 ; 410-418 ; 510-518) agencés dans un environnement où se trouve le dispositif distant (152 ; 402), et sachant que les données d'entrée sont reçues par le service de capture (210) de la part du ou des dispositifs de détection (150 ; 410-418 ; 510-518) via une liaison de communication en périphérie, sachant que le ou les dispositifs de détection (150 ; 410-418 ; 510-518) comprennent des caméras vidéo, des caméras d'imagerie, des caméras thermiques, des capteurs de température, des capteurs de pression, des capteurs d'ultrasons, des transducteurs, des microphones, des capteurs de mouvement, des accéléromètres, des gyroscopes, ou une combinaison de ceux-ci.

14. Le système d'après la revendication 13, comprenant en outre :
un dispositif informatique (140 ; 160) comprenant une deuxième mémoire et un troisième processeur (142 ; 162), sachant que le dispositif informatique (140 : 160) est accessible au dispositif de périphérie (110) via une liaison de communication non périphérique, et sachant que le dispositif de périphérie (110) est configuré pour stocker périodiquement les données de commande (224A), les données de résultat (224B), ou les deux, dans une base de données historique (146) maintenue au niveau de la deuxième mémoire (144), sachant que les données de résultat (224B) correspondent à des informations représentatives d'un environnement à partir duquel les données d'entrée sont obtenues, et sachant que le dispositif de périphérie (110) stocke les données de commande (224A), les données de résultat (224B), ou les deux, dans la base de données historique (146) maintenue au niveau de la deuxième mémoire (144) via la liaison de communication non périphérique.

15. Le système d'après la revendication 14, comprenant en outre :
une interface utilisateur graphique configurée pour présenter à un utilisateur des informations générées par le moteur de modélisation (120), la logique de commande (240), ou les deux, sachant qu'une première partie des informations présentées via l'interface utilisateur graphique est stockée au niveau d'une base de données (260) stockée dans la mémoire (114) du dispositif de périphérie (110), et sachant qu'une deuxième partie des informations présentées via l'interface utilisateur graphique est obtenue à partir de la base de données historique (146) maintenue au niveau du dispositif informatique (140 ; 160).
